# EUROPÄISCHE PATENTANMELDUNG

(11) **EP 3 489 433 A1**
(43) Veröffentlichungstag der Anmeldung: **29.05.2019**
(21) Anmeldenummer: 18400032.1
(22) Anmeldetag: 27.11.2018
(51) Int. Cl.: E04F 17/04, F24S 20/66, E04B 1/74

(54) **LEICHT VERLEGBARE DÄMMVORRICHTUNG FÜR BAUWERKE UND KOSTENGÜNSTIGES VERFAHREN ZUR DAUERHAFTEN ISOLIERUNG UND ZUR FEUCHTIGKEITSREGULIERUNG DERSELBEN**

(30) Priorität: 27.11.2017 DE 102017010949
(71) Anmelder: Frenzel, Doris, 45699 Herten (DE)
(72) Erfinder: Frenzel, Doris, 45699 Herten (DE)
(74) Vertreter: Gehrke, Peter P.

(57) **Zusammenfassung**

Die Erfindung betrifft eine leicht verlegbare Dämmvorrichtung für Bauwerke mit an den Außenwänden angebrachte Membranschicht und angeordneten Kammereinrichtungen deren äußere Seitenwände luftdicht und deren innere Seitenwände wasserdicht und wasserdampfdurchlässig ausgestaltet sind, die äußeren Seitenwände als Wetterhülle lichtdurchlässig und farblos transparent ausgebildet sind, die Kammereinrichtungen aufeinander angeordnet sind, die Kammereinrichtungen quer zur Lotrechten in Isolierstellung ausgerichtet sind, die Kammereinrichtungen in horizontaler Umlaufrichtung um die Außenwände ausgerichtet sind, die Luft in den Kammereinrichtungen horizontal umwälzbar ist, die Kammereinrichtungen voneinander mittels ihrer Trennwände getrennt sind, die innere Schleusen und die äußeren Seitenwände äußere Schleusen aufweisen zur Steuerung von Luftzirkulation und Temperatur der Luft in den Kammereinrichtungen, und ein kostengünstiges Verfahren zur dauerhaften Isolierung von Bauwerken gegenüber Temperaturverlusten und zu ihrer Feuchtigkeitsregulierung .

## Beschreibung

Die Erfindung betrifft eine leicht verlegbare Dämmvorrichtung für ein Bauwerk mit an den Außenwänden desselben angeordneten Kammereinrichtungen zur Entfeuchtung und Temperierung des Bauwerks, wobei die Außenseite der Außenwände eine Beschichtung aufweist, und ein kostengünstiges Verfahren zur dauerhaften Isolierung eines Bauwerkes gegenüber Temperaturverlusten, vorzugsweise zur Aufheizung und Kühlung des Bauwerkes, und zur Feuchtigkeitsregulierung der Bauwerkhüllen.

Im Stand der Technik wird in EP 1 507 046 auf die Bereitstellung eines herkömmlichen Energiesparhauses mit einem isolierglasversehenen Wintergarten offenbart, wobei zwar das Energiesparhaus von außen aufwärmbar und die Wärme über Zuluft- und Abluftöffnungen verteilbar ist. Eine Steuerung der Temperatur im Inneren des Energiesparhauses erfolgt mit mit der Außenluft verbindbaren Zuluftöffnungen; Möglichkeiten der Vollisolierung des herkömmlichen Gebäudes zwecks Temperatursteuerung und Entfeuchtung derselben sowie der Anwendung der herkömmlichen Lehre bei alten Gebäuden, ggf. mit feuchten Außenwänden werden nicht vorgeschlagen.

Die DE 33 12 998 beschreibt zwar eine herkömmliche Gebäudefassade mit einer außen angeordneten Glasfläche, die von der Gebäudeaußenwand beabstandet ist zur Bereitstellung eines sog. Speicherkerns. Dieser Speicherkern eignet sich gleichfalls nicht zur Entfeuchtung von Gebäuden, so dass die Gefahr der Verpilzung zwischen dem Speicherkern und Außenseite der Außenwände der Gebäude besteht. Darüber hinaus werden keine Vorschläge zur Verringerung des Energiebedarfs im Inneren des Gebäudes, der Gewinnung und der dauerhaften Nutzung von Solarenergie in Abhängigkeit von klimatischen Verhältnissen sowie zur Anwendbarkeit für Gebäude unabhängig von deren Alter mitgeteilt.

Die DE 10 2013 018 627.7 beschreibt eine Dämmvorrichtung für herkömmliche Gebäude mit einer außen angeordneten transparenten Hülle, die von der Gebäudeaußenwand beabstandet ist und für Wärmetransport und Dämmung sorgt, ohne die Luftzufuhr an den Gebäudeaußenwänden zu unterbinden. Möglichkeiten zur Entfeuchtung der Gebäude unter Beibehaltung der erforderlichen Bauausgleichsfeuchte sowie Möglichkeiten zur gleichmäßigen vertikalen Flächentemperierung der Außenwände werden nicht mitgeteilt. Außerdem werden neben der Gewinnung und Nutzung von Solarenergie in Abhängigkeit von klimatischen Verhältnissen keine Möglichkeiten zur Nutzung erneuerbarer Energien durch zukünftige potentielle Innovationen in diesem Bereich berücksichtigt. Darüber hinaus potenzieren sich die Kosten und Aufwände für die Dämmvorrichtung in Abhängigkeit von der steigenden Geschossanzahl der Gebäude.

In der Druckschrift FR 2 709 319 - A1 wird eine herkömmliche wasserdichte Isolierung eines Bauwerks offenbart, die von der Außenseite des Bauwerks beabstandet ist. Die Belüftung des Zwischenraums zwischen der Isolierung und der Außenseite der Außenwand erfolgt durch ein von außen zugängliches Lüftungsrohr. Die in der Druckschrift offenbarte Isolierung bedeckt vollflächig einer der Außenseiten eines Bauwerks; gerichtet. An Hinweisen auf eine für die Außenwand vorteilhafte Entfeuchtung fehlt, so dass sich die gesundheitsschädliche Verpilzung im Kontaktbereich zwischen der Isolierung und der Außenwand einstellt. Die von der Verpilzung ausgehende Gefahr infolge Pilzsporenverbreitung wird übersehen und das Eindringen der Pilzsporen aus dem Kontaktbereich zwischen der Isolierung und der Außenwand über die in Außenwänden angeordneten Fensteröffnungen in die Wohnräume des Bauwerks verbleibt unbeachtet wird, so dass dem Benutzer von der Verwirklichung der herkömmlichen Lehre dringend abgeraten wird.

Überdies spricht zudem der weit zurückliegende Zeitrang der Druckschrift, i.e. 24.08.1993, für deren mangelnde Hilfestellung, eine Dämmvorrichtung bereitzustellen, die den Heizenergiebedarf im Innern des Bauwerks verringert, zusätzlich Wärme gewinnt und die Wärme für das Bauwerk nutzt, die Möglichkeit der Gewinnung und Nutzung von Solarenergie je nach klimatischen Verhältnissen bereithält, für eine baugerechte Klimatisierung des Bauwerks sorgt, die Feuchtigkeit der Außenwände reguliert, den funktionalen, ästhetischen sowie historischen Ursprungscharakter der Fassaden des Bauwerks bewahrt und aufwertet.

Aufgabe der Erfindung ist, eine leicht verlegbare Dämmvorrichtung und ein bezahlbares und wirtschaftliches Verfahren zur energetischen Nutzung der Außenwände von Bauwerken, unabhängig von ihrem Alter, ihrer Größe und der Art der Nutzung derselben, bereitzustellen.

Die bereitzustellende Dämmvorrichtung soll
den Heizenergiebedarf im Innern des Bauwerks minimieren,
zusätzlich Wärme gewinnen und die Wärme für das Bauwerk, wie Gebäude, nutzen,
mindestens die Möglichkeit der Gewinnung und Nutzung von Solarenergie je nach klimatischen Verhältnissen bereithalten,
für Klimatisierung des Bauwerks sorgen,
die Feuchtigkeit der Außenwände regulieren,
gleichwohl den funktionalen, ästhetischen sowie historischen Ursprungscharakter der Fassaden des Bauwerks bewahren und aufwerten.

Weiterhin sollen die Dämmvorrichtung und das Verfahren zur energetischen Nutzung der Außenwände des Bauwerks nachhaltig und wirtschaftlich sein und die Langlebigkeit der Dämmmaßnahme aufrechterhalten.

Ebenso sollen die Dämmvorrichtung und das Verfahren zur energetischen Nutzung der Außenwände des Bauwerks sich für Gebäulichkeiten aller Art, unabhängig von dem Zeitpunkt ihrer Erstellung eignen.

Die Aufgaben werden gelöst durch den Hauptanspruch und den Nebenanspruch, die Unteransprüche betreffen bevorzugte Ausgestaltungen der Erfindung.

Der Gegenstand der Erfindung betrifft eine leicht verlegbare Dämmvorrichtung für ein Bauwerk mit mindestens einer, vorzugsweise zwei oder drei oder mehreren an den Außenwänden desselben angeordneten Kammereinrichtungen zur Entfeuchtung und Temperierung des Bauwerks, die Kammereinrichtungen Innenräume aufweisen, wobei
die Außenseiten der Außenwände eine Beschichtung aufweisen,
welche dadurch gekennzeichnet ist, dass
die Beschichtung wasserdicht und wasserdampfdurchlässig ausgestaltet ist,
vorzugsweise die Kammereinrichtungen aufeinander angeordnet sind,
vorteilhafterweise die Kammereinrichtungen in einer Umlaufrichtung um die Außenwände des Bauwerks sich erstrecken,
insbesondere die Kammereinrichtungen, oder deren Innenräume oder die in den Innenräumen derselben verlaufenden Mitte-Längsachsen quer zur Lotrechten ausgerichtet sind,
die Innenräume der Kammereinrichtungen von äußeren Seitenwänden und/oder Trennwänden und/oder von der Beschichtung oder von einem Teil derselben seitlich begrenzt sind,
bevorzugterweise zumindest die äußeren Seitenwände lichtdurchlässig ausgebildet sind,
insbesondere die Trennwände in den oberen Bereichen und den unteren Bereichen der Kammereinrichtungen angeordnet sind,
die Trennwände an den Außenseiten luftdicht gekoppelt sind,
vorzugsweise die einander benachbarten oder angrenzenden Kammereinrichtungen jeweils eine gemeinsame Trennwand aufweisen,
die Trennwände innere Schleusen zur Steuerung von Luftzirkulation und / oder von Temperatur und/ oder Feuchtigkeit in und/oder zwischen den Innenräumen der einander benachbarten Kammereinrichtungen aufweisen
und / oder
die äußeren Seitenwände äußere Schleusen zur Steuerung der Luftzirkulation und/oder der Temperatur und/ oder Feuchtigkeit in den Innenräumen der Kammereinrichtungen sowie zum Austausch der Luft und/oder Feuchtigkeit der Innenräume der Kammereinrichtungen mit der der Außenumgebung aufweisen.

Ein weiterer Gegenstand der Erfindung bezieht sich auf ein Bauwerk mit der erfindungsgemäßen Dämmvorrichtung mit an den Außenwänden desselben angeordneten Kammereinrichtungen zur Entfeuchtung und Temperierung des Bauwerks.

Ein anderer Gegenstand der Erfindung bezieht sich auf ein kostengünstiges Verfahren zur dauerhaften Isolierung eines Bauwerkes gegenüber Temperaturverlusten, vorzugsweise Aufheizung des Bauwerks, und zur Beibehaltung der Wasserdampfdurchlässigkeit der Außenwände des Bauwerks nach außen in die Außenumgebung,
welche dadurch gekennzeichnet ist, dass
gegen die Außenwände des Bauwerkes eine wasserdichte und wasserdampfdurchlässige Beschichtung aufgetragen wird,
Kammereinrichtungen, welche in den oberen und unteren Bereichen ihrer Innenräume Trennwände und in dem dem Bauwerk abgewandten Bereich ihrer Innenräume lichtdurchlässige äußere Seitenwände aufweisen, gegen die Beschichtung der Außenseiten angesetzt und luftdicht an den Außenwänden und deren Außenseiten gekoppelt werden, insbesondere die Trennwände, z.B. auch die äußeren Wänden, der Kammereinrichtungen gegen die Beschichtung der Außenseiten oder gegen die die Beschichtung seitlich begrenzenden Abschnitte der Außenseiten der Außenwände angesetzt und luftdicht an der Beschichtung oder den Außenwänden und deren Außenseiten gekoppelt werden,
die aufeinander befindlichen Kammereinrichtungen quer zur Lotrechten ausgerichtet und in einer Umlaufrichtung um die Außenwände des Bauwerks sich erstreckend angeordnet werden,
die Luftzirkulation, die Temperatur und / oder die Feuchtigkeit in den Innenräumen der Kammereinrichtungen über in den Trennwänden und / oder in den äußeren wasserdichten, wasserdampfdurchlässigen Seitenwänden angeordnete Schleusen angesteuert werden.

Die Erfindung betrifft auch ein kostengünstiges Verfahren zur dauerhaften Isolierung eines Bauwerkes gegenüber Temperaturverlusten, vorzugsweise aus Aufheizung des Bauwerks und zur gleichmäßigen Temperierung aller Außenwände desselben, zur Bereit- oder Herstellung der, vorzugsweise alle, Merkmale der leicht verlegbaren Dämmvorrichtung mit an den Außenwänden des Bauwerks angesetzter Membranschicht und angeordneten Kammereinrichtungen,
die äußeren Seitenwände der Kammereinrichtungen für zusätzliche Treibhauseffekte mindestens an der Ost-, Süd- und der Westseite des Bauwerks aus farblos transparentem kunststoffartigem Material und/oder Glas bestehen,
die Wärmeleitfähigkeit der Membranschicht für eine allseitige gleichmäßige Temperierung der Außenwände des Bauwerks oder von Teilen desselben sorgt und/oder Ausdehnungen der Baumaterialien wärmeregulierend ausgleicht und/oder warme Luft, die lokal an Außenwänden des Bauwerks auftritt, selbsttätig an kühlere Außenwände des Bauwerks verteilt,
lokal erwärmte Luft im Innenraum einer Kammereinrichtung, je nach klimatischen Verhältnissen aus Solarenergie und/oder saisonal verursachte Transmissionswärme aus dem Innern des Bauwerks an den Außenwänden desselben, zum Temperaturausgleich mit unbeschatteten und/oder kühleren Außenwänden selbsttätig horizontal im Innenraum der Kammereinrichtung um die Außenwände umgewälzt wird,
die angesetzte Membranschicht und die Luft im Innenraum der Kammereinrichtungen jeweils einen thermischen Puffer für den anderen bilden,
und/oder
die Steuerung der in den äußeren Seitenwänden angeordneten äußeren Schleusen die Luftzirkulation und den Temperaturausgleich der Luft innerhalb der Kammereinrichtungen beschleunigt und/oder
einen Luftaustausch mit der Außenumgebung ermöglicht
und/oder
die Steuerung der in den Trennwänden angeordneten inneren Schleusen die Luftzirkulation und einen Temperaturausgleich zwischen mindestens zwei Kammereinrichtungen ermöglicht und/oder
die Steuerung durch Öffnen bzw. Schließen der inneren Schleusen der inneren Seiten, wie Trennwände, der Kammereinrichtungen die Luftzirkulation und einen Temperaturausgleich der Luft innerhalb der Kammereinrichtungen mit dem Luftvolumen in Bauwerksteilen, wie Kellern, Hausfluren und/oder Dächern, ermöglicht.

Ein weiterer Gegenstand der Erfindung bezieht sich auf ein kostengünstiges Verfahren zur Entfeuchtung und Feuchtigkeitsregulierung der Außenwände der Gebäudeeinheit bei Bewahrung der erforderlichen Bauausgleichsfeuchte,
das, vorzugsweise alle, Merkmale der leicht verlegbaren Dämmvorrichtung mit an den Außenwänden des Gebäudes angesetzter Membranschicht und angeordneten Kammereinrichtungen aufweist,
die Quellfähigkeit der Membranschicht unterschiedliche Feuchtigkeitshaushalte der Außenwände der Gebäudeeinheit kompensiert,
die, vorzugsweise je nach Ausbildung diffusionsoffene, Membranschicht die erforderliche Bauausgleichsfeuchte bewahrt,
die, vorzugsweise je nach Ausbildung diffusionsoffene, Membranschicht übermäßige Feuchtigkeit aus der Bauwerkssubstanz stets nach außen ableitet,
die gerichtet diffusionsoffene Membranschicht das Eindringen von Feuchtigkeit von außen in die Gebäudesubstanz verhindert,
die gegenseitige thermische Pufferung der angesetzten Membranschicht und der Luft im Innenraum der Kammereinrichtungen den Taupunkt nach außen verschiebt,
lokal erhöht auftretende Luftfeuchtigkeit im Innenraum einer Kammereinrichtung selbsttätig mit niedrigerer Luftfeuchtigkeit innerhalb der Kammereinrichtung ausgleicht
und/oder
die Steuerung der in den äußeren Seitenwänden angeordneten äußeren Schleusen den Feuchtigkeitsaustausch der Luft in den Kammereinrichtungen mit der Außenumgebung ermöglicht,
und/oder
die Steuerung der in den Trennwänden angeordneten inneren Schleusen den Feuchtigkeitsausgleich der Luft zwischen mindestens zwei Kammereinrichtungen ermöglicht,
und/oder
die Steuerung durch Öffnen bzw. Schließen innerer Schleusen an den inneren Seitenwänden der Kammereinrichtungen die Luftfeuchtigkeit in den Innenräumen der Kammereinrichtungen mit der Luftfeuchtigkeit in Bauwerksteilen, wie Kellern, Hausfluren und/oder Dächern ermöglicht
und/oder
ein gleichzeitiges Öffnen der äußeren Schleusen der Außenseiten und der inneren Schleusen der Trennwände der Kammereinrichtungen
für "Durchzug" an den inneren Seitenwänden der Kammereinrichtungen sorgt,
zu hohe Feuchtigkeit der Luft im Innenraum der Kammereinrichtungen in die Außenumgebung ableitet,
für Trocknung der Außenwände des Bauwerks sorgt,
die Außenwände des Bauwerks klimatisiert,
und das zusätzliche Öffnen der inneren Schleusen der inneren Trennwände
für "Durchzug" in den Bauwerksteilen, wie Keller, Hausfluren und/oder Dächern sorgt,
zu hohe Feuchtigkeit in diesen Bauwerksteilen über den Weg über die Innenräume der Kammereinrichtungen in die Außenumgebung ableitet,
die Trocknung von Bauwerksteilen, wie Keller, Hausflure und/oder Dächer unterstützt.

Ein weiterer Gegenstand der Erfindung ist gerichtet auf ein Bauwerk,
das, vorzugsweise alle, Merkmale der leicht verlegbaren Dämmvorrichtung mit an den Außenwänden des Bauwerks angesetzter Membranschicht und angeordneten Kammereinrichtungen aufweist,
deren äußere Seitenwände mindestens an der Ost-, Süd- und der Westseite des Bauwerks aus transparentem kunststoffartigem Material und/oder Glas bestehen oder zumindest diese enthalten,
deren innere und/oder äußere Schleusen und/oder Keller-, Hausflur- und/oder Dachfenster je nach Bedarf und/oder Saison und/oder klimatischen Verhältnissen und/oder Temperatur und/oder Luftfeuchtigkeit in den Innenräumen der Kammereinrichtungen variabel gesteuert werden und weitere Ausgestaltungen der Erfindung beinhaltet.

Unter einem Bauwerk werden im Sinne der Erfindung auch ein oder mehrere Gebäude verstanden, die nebeneinander stehen oder z.B. als eine Gebäudeeinheit ausgebildet sind, die eine gemeinsame Außenwand aufweisen können.

Unter Beschichtung wird im Sinne der Erfindung auch eine wasserdichte, wasserdampfdurchlässige Schicht oder eine innere wasserdichte, wasserdampfdurchlässige Seitenwand verstanden, die auf die Außenseite der Außenwand des Bauwerks aufgetragen ist oder aufgetragen wird. Die Beschichtung kann in Form einer Fassadenfarbe aufgetragen werden. Ebenso kann die Beschichtung eine Membranschicht sein, die semipermeabel ist, so dass sie wasserdampfdurchlässig und wasserundurchlässig ausgestaltet ist. Die Membranschicht könnte beispielsweise als Folie auf die Außenseite der Außenwand des Bauwerks aufgebracht, wie aufgeklebt, oder auf sonstige dem Fachmann bekannte Weise fest an der Außenseite der Außenwand gekoppelt werden, so dass weiterhin Feuchtigkeit aus der Außenwand des Bauwerks über die Membranschicht nach außen gelangt; die z.B. als Membranfolie aufgebrachte Beschichtung kann auch als innere wasserdichte, wasserdampfdurchlässige Seitenwand der Kammereinrichtung bezeichnet werden. Unter wasserdampfdurchlässig wird im Sinne der Erfindung auch verstanden diffusionsoffen.

Unter Außenumgebung wird im Sinne der Erfindung auch der Bereich außerhalb der Kammereinrichtung oder -en oder des Bauwerks verstanden. Unter Kopplung wird im Sinne der Erfindung ein form-, reib- und/oder kraftschlüssiger Sitz mit Hilfe von Verklebung, Vernietung, Verschraubung, Stiftverbindung, usw. mittels gegen die Außenwand, wie gegen deren Außenseite, angesetzter Leisten oder Schienen und/oder dergleichen verstanden.

Die Kammereinrichtungen mit deren die Innenräume begrenzenden Trenn- und Seitenwänden können schlauchförmig oder gürtelförmig um die Außenwand des Bauwerks oder um die Lotrechte desselben herum verlaufen. So können die in den Innenräumen derselben verlaufenden Mitte-Längsachsen quer zu der Lotrechten und/oder parallel zueinander ausgerichtet sein. Auch ist es von Vorzug, wenn in einer Ausgestaltung der erfindungsgemäßen leicht verlegbaren Dämmvorrichtung die Trennwände und/oder deren den Innenräumen der Kammereinrichtungen zugewandten Seiten und/oder die äußeren Seitenwände und/oder deren den Innenräumen der Kammereinrichtungen zu- oder abgewandten Seiten in Umlaufrichtung quer zu der Lotrechten und/oder parallel zu derselben ausgerichtet sind. Auch die den Innenräumen der Kammereinrichtung zugewandten Seiten der inneren Seitenwände oder die der Membranfolien können in Umlaufrichtung quer zu der Lotrechten und/oder parallel zu der Lotrechten verlaufen.

In einer Ausgestaltung der erfindungsgemäßen Dämmvorrichtung mit drei aufeinander angeordneten Kammereinrichtungen sind deren Innenräume von äußeren Seitenwänden, den Trennwänden und von der Beschichtung seitlich begrenzt; der Innenraum der, beispielsweise auf der mittleren Kammereinrichtung angeordneten, oberen Kammereinrichtung kann seitlich im oberen Bereich zusätzlich von einer äußeren Wand begrenzt sein oder die äußere Seitenwand geht, z.B. teilkreisförmig, in die Beschichtung über; der Innenraum der, beispielsweise unter der mittleren Kammereinrichtung angeordneten, unteren Kammereinrichtung kann im unteren Bereich zusätzlich von einer äußeren Wand oder vom Erdboden oder dessen Abdeckung seitlich begrenzt sein oder die äußere Seitenwand geht, z.B. teilkreisförmig, in die Beschichtung über.

Die Innenräume der Kammereinrichtungen werden in dem Bereich, der dem Bauwerk zugewandt ist, von der Beschichtung oder zumindest einem Teil derselben begrenzt, in dem Bereich, der der Außenwand des Bauwerks abgewandt ist, von den äußeren Seitenwänden und/oder in den oberen und unteren Bereichen von den Trennwänden vorteilhafterweise begrenzt. Da die Kammereinrichtungen aufeinander angeordnet werden, weisen vorteilhafterweise die einander benachbarten Kammereinrichtungen eine gemeinsame Trennwand jeweils auf. Die Trennwand bzw. deren Ebenen, die den den Innenräumen zugewandten Seiten derselben entsprechen können, sind bevorzugterweise im rechten Winkel oder annähernd im rechten Winkel zu der Außenwand bzw. zu deren Außenseite ausgerichtet. Mindestens zwei Kammereinrichtungen sind gegen die Außenwand des Bauwerks vorzugsweise luftdicht angesetzt, so dass ein Lufttransport zwischen der den Trennwänden der Kammereinrichtungen und der Außenseite der Außenwand des Bauwerks unterbunden ist.

Die luftdichte Kopplung kann beispielsweise mittels herkömmlicher Kopplungen, wie Verklebung, Vernietung, Verbindung mittels angesetzter Leisten oder Schienen und/oder dergleichen, erfolgen. Durch die Kammereinrichtungen werden die Außenwand und deren Außenseite luftdicht abgegrenzt von der Außenumgebung, sodass Wasserdampf oder Feuchtigkeit aus der Außenwand des Bauwerks in die Innenräume der Kammereinrichtung gelangen und von dort über die äußeren Schleusen nach außen austreten kann. Die äußeren Seitenwände und/oder die Trennwände sind luftdicht und/oder wasserdicht und/oder wasserdampfdurchlässig ausgestaltet.

In einer Ausführungsform der erfindungsgemäßen Dämmvorrichtung und des kostengünstiges Verfahren sind die Kammereinrichtungen gegen die Beschichtung angesetzt, so dass die Beschichtung, neben z.B. den Trennwänden, die Innenräume der Kammereinrichtungen vorteilhafterweise auch zumindest teilweise begrenzen, die Trennwände und/oder äußeren Wände auch an der Beschichtung anliegen; die luftdicht an die Beschichtung mit Trennwänden und/oder äußeren Wänden angesetzten Kammereinrichtungen sind an der Außenwand, wie deren Außenseiten, gekoppelt, so dass deren Innenräume in Richtung zu dem Bauwerk seitlich von der Beschichtung begrenzt sind. In einer weiteren Ausführungsform der erfindungsgemäßen Dämmvorrichtung und des kostengünstiges Verfahren sind die Kammereinrichtungen gegen die Beschichtung angesetzt sein, so dass die Trennwände und/oder die äußeren Wände derselben an die die auf die Außenseite aufgetragene Beschichtung begrenzenden Abschnitte der Außenseite der Außenwänden angesetzt und die Trennwände und/oder die äußeren Wände luftdicht an den Außenwänden, wie deren Außenseiten, unmittelbar gekoppelt sind; die Innenräume der Kammereinrichtungen werden vorteilhafterweise auch zumindest teilweise von der Beschichtung, neben z.B. den Trennwänden, begrenzt.

Die äußeren Seitenwände können äußere Schleusen aufweisen, die auch die Zugänglichkeit der Innenräume der Kammereinrichtungen mit der Außenumgebung ermöglichen. Die Trennwände können gleichfalls innere Schleusen aufweisen, die die Innenräume der einander benachbarten Kammereinrichtungen oder der aufeinander angeordneten Kammereinrichtungen durchgängig machen können, zwecks Austausch von Luft, Feuchtigkeit und/oder Temperatur in vertikaler Richtung. Der wesentliche Vorteil der erfindungsgemäßen Dämmvorrichtung ist grundsätzlich die horizontale Luftumwälzung in den Innenräumen der Kammereinrichtungen, da sich zeigt, dass die herkömmliche Luftumwälzung in vertikaler Ausrichtung nicht die vorgenannten Aufgaben zu lösen vermag.

Unter äußerer Schleuse wird im Sinne der Erfindung auch eine, vorteilhafterweise ansteuerbare, Vorrichtung zum Öffnen und Verschließen eines Zugangs eines Innenraums der Kammereinrichtung zur Außenumgebung, verstanden, unter innerer Schleuse wird im Sinne der Erfindung auch eine, vorteilhafterweise ansteuerbare Vorrichtung zum Öffnen und Verschließen eines Zugangs zwischen zwei Innenräumen der Kammereinrichtungen oder einem Innenraum der Kammereinrichtung und dem Innern des Bauwerks verstanden.

Die inneren Schleusen und die äußeren Schleusen werden mittels einer herkömmlichen Steuerungs-Einrichtung angesteuert. Die Innenräume der Kammereinrichtungen können mit den Öffnungen von Fenstern von Kellern, Dach oder Hausfluren des Bauwerks durchgängig verbunden sein, sodass ein von dem Benutzer als erforderlich angesehener Luftaustausch über die Fenster in die Innenräume der Kammereinrichtung möglich ist. Die inneren Schleusen in den Trennwänden ermöglichen einen Luftaustausch und Wärmeaustausch wie auch Feuchtigkeitsaustausch zwischen den aufeinander angeordneten Kammereinrichtungen und deren Innenräume. Die äußeren Schleusen, die in den äußeren Seitenwänden angeordnet sind, ermöglichen gleichfalls den Luftaustausch zwischen der Luft der Innenräume mit der Außenumgebung entsprechenden Temperaturaustausch. In einer besonderen vorteilhaften Ausgestaltung können die Innenräume noch mit Ventilatoren verbunden oder in diesen angeordnet sein, die die Luftumwälzung in horizontaler Richtung um die Außenwand des Bauwerks herum verstärken. Die in den Innenräumen erfolgende Luftumwälzung erfolgt im Wesentlichen horizontal und kann unterstützt werden durch den über innere Schleusen der Trennwände stattfindenden vertikalen Austausch.

In einer Ausgestaltung der erfindungsgemäßen Dämmvorrichtung besteht die angesetzte Membranschicht aus einem Anstrich aus herkömmlicher Fassadenfarbe, die Teilchen mit wärmedämmenden Eigenschaften enthält.

Als Membranschicht aus Fassadenfarbe eignen sich je nach Ursprungscharakter des Bauwerks herkömmliche Mineralfarben, Dispersionsfarben und Silikonharzfarben. In der Ausgestaltung als sogenannte "Dämmfarbe" enthalten die Fassadenfarben zusätzlich Teilchen mit wärmedämmenden Eigenschaften, die aus Kork, aus Hohlkugeln aus Keramik oder Glas und / oder aus Aerogel bestehen können, und / oder einen Durchmesser von lnm bis 999 nm und/ oder 1nm bis 999 µm und/oder 1 µm bis 999 µm aufzuweisen vermögen.

Das Bauwerk wird durch die aufgetragene Membranschicht aus Dämmfarbe optisch aufgewertet, gegen das Eindringen von Wasser geschützt, witterungsresistent und resistent gegen Umweltbelastungen. Eine Membranschicht aus Dämmfarbe mit Anteilen aus Aerogel zeichnet sich besonders durch eine hohe Dämmwirkung aus. Korkfarbe als verwendeter Dämmanstrich ist nachhaltig, enthält keine Biozide und keine sonstigen krebserregenden Stoffe und kann einfach auf die Außenseite der Außenwand gespritzt werden. Eine Dämmfarbe mit einem Anteil an Hohlglaskugeln ist wasserdampfdurchlässig, vermag Fassadenrisse zu verfüllen und eine spannungsfreie Farboberfläche zu bilden. Die Hohlglaskugeln bewirken zudem, dass bei einem steilen Einfallswinkel der Sonne die Sonnenstrahlen reflektiert werden und bei tiefstehender Sonne die flach auftreffenden Sonnenstrahlen die Innenräume der Kammereinrichtungen erwärmen.

Eine herkömmliche diffusionsoffene Fassadenfarbe auf Silikonharz-Basis mit einem hohen Anteil an keramischen Hohlkugeln oder Nano-Kristallen, macht die Membranschicht ebenfalls besonders elastisch, vermeidet Spannungsrisse und erzeugt einen thermischen Wärmeschutz. Zudem ist sie wasserdicht, nicht giftig, enthält keine brennbaren Naturstoffe und ist durch die Keramikanteile widerstandsfähig gegenüber UV-Strahlen. Die keramischen Teilchen verteilen durch ihre hohe Wärmeleitfähigkeit die Wärme innerhalb der Membranschicht schneller um die Außenwände. An den Außenwänden des Bauwerks auftretende Feuchtigkeit wird durch ihre gerichtete Diffusionsoffenheit nach außen transportiert und kann über die Membranschicht nicht ins Innere der Außenwände des Bauwerks gelangen. Durch die Dämmfarbe stellt sich kein Kondenswasser ein, so dass Verpilzung an den die Innenräume begrenzenden Innenseiten der Kammereinrichtungen vermieden wird.

In einer weiteren Ausgestaltung der erfindungsgemäßen Dämmvorrichtung werden für die äußeren Seitenwände und/oder für die Trennwände der Kammereinrichtungen Platten oder Folien aus farblos transparenten, witterungsbeständigen und vollständig recyclebaren Kunststoffen wie ETFE oder PMMA oder PC eingesetzt.

ETFE (Ethylen-Tetrafluorethylen-Copolymer) ist ein fluoriertes Copolymer bestehend aus den Monomeren Tetrafluorethylen und Ethylen. Als ein Derivat des als Teflon bekannten Kunststoffs, besitzt ETFE ein geringes Eigengewicht und weist eine hohe Licht- und Ultraviolett-Durchlässigkeit auf. Insbesondere wegen seiner mechanischen Eigenschaften gewinnt ETFE, z.B. zur Herstellung der Trenn- und der äußeren Seitenwände, als sogenannte Architekturfolie wachsende Bedeutung im Bauwesen. Diese Architekturfolie ist als innovatives Baumaterial ein sowohl unter Bauingenieuren als auch Architekten üblicherweise verwendeter Fachbegriff in der Literatur, der heutzutage nicht mehr erläutert werden muss - Stand der Technik-- vorallem im Zusammenhang mit "textile Membran-Architektur".

PMMA (Polymethylmethacrylat Polymethylmethacrylat) ist ein synthetischer, glasähnlicher thermoplastischer Kunststoff;
PC (Polycarbonat) ist ein glasklar verarbeitbarer, amorpher Thermoplast mit guter Steifigkeit und Festigkeit sowie mit einer für amorphe Kunststoffe hohen Schlagzähigkeit.

ETFE, PMMA und PC eignen sich auf Grund ihrer Eigenschaften sehr gut für die Ausgestaltung der Kammereinrichtungen.

Im Folgenden können die äußeren Seitenwände der Kammereinrichtungen des Bauwerks auch als Wetterhüllen bezeichnet werden, da die Wetterhülle nur das Wetter abhält und Luft enthält, nicht aber tragende oder stützende Funktion, wie eine tragende oder stützende Außenwand, besitzt. Die Kammereinrichtungen des Bauwerks können den besonderen Erfordernissen an Brandschutz, Algenresistenz, Schlagzähigkeit und anderen bauphysikalischen Eigenschaften individuell angepasst werden.

In einer weiteren Ausgestaltung der erfindungsgemäßen Dämmvorrichtung bestehen die transparenten äußeren Seitenwände der Kammereinrichtungen, um die wärmedämmenden Eigenschaften zu erhöhen, aus mehreren gleich voneinander beabstandeten Membranschichten, zum Beispiel durch den Einsatz von Doppelstegplatten aus PMMA oder PC oder durch mehrere Schichten transparenter Folie mit ETFE. In einer besonderen qualitativen, innovativen Ausgestaltung werden die Kammereinrichtungen kostengünstig, mit den jeweiligen, den konkreten Außenwänden des Bauwerks angepassten Maßen und Formen über 3D-Druck produziert.

In einer weiteren Ausgestaltung der erfindungsgemäßen Dämmvorrichtung können die Trennwände der Kammereinrichtungen zur weiteren Regulierung der Luftfeuchtigkeit als Trocknungsschicht ausgestaltet sein und hierfür zum Beispiel aus luftdichtem, wasserdampfdiffusionsoffenem Material bestehen oder mit diesen hergestellt sein und/oder semipermeables Material mit osmotischer Wirkung beinhalten. In einer zusätzlichen Ausgestaltung der erfindungsgemäßen Dämmvorrichtung können die inneren Schleusen der Trennwände der Kammereinrichtungen als Trocknungsschicht ausgestaltet sein, wobei die Trocknungsschicht luftdichtes, wasserdampfdiffusionsoffenes Material und/oder semipermeables Material mit osmotischer Wirkung enthalten kann.

Die Steuerung der Schleusen der erfindungsgemäßen Dämmvorrichtung kann mittels verschiedener Ausgestaltungen erfolgen: Manuell, mechanisch, automatisch und/oder digital. Zum Beispiel kann die Steuerung einfach automatisch auf Grundlage einer Zeitschaltung erfolgen. Sie kann aber auch auf Grundlage der geografischen Lage des Bauwerks erfolgen, hierbei die kalendarischen, saisonalen und/oder täglichen Sonnenstände berücksichtigen und/oder auf Grundlage der gemessenen Temperaturen und/oder Feuchtigkeit der Luft innerhalb der Kammereinrichtungen und/oder der Luft der Außenumgebung erfolgen und Wetterbedingungen, wie Sturm, Hagel, Regen und andere, einbeziehen. In einer besonders qualitativen und innovativen Ausgestaltung der variablen Steuerung werden die Schleusen der erfindungsgemäßen Dämmvorrichtung auf Grundlage digitaler Steuerung über SMART-Steuerung gesteuert.

In einer weiteren Ausgestaltung kann sich die erfindungsgemäße Dämmvorrichtung kostengünstig um sehr viele aneinander stehende Gebäude als Bauwerk bis hin zu vollständigen Straßenzügen erstrecken, unabhängig davon, wie hoch die Anzahl der Geschosse jedes einzelnen Gebäudes des Bauwerks ist.

In einer weiteren besonderen Ausgestaltung werden die Kammereinrichtungen der erfindungsgemäßen Dämmvorrichtung mit Gewächshäusern, Wintergärten und/oder weiteren zusätzlichen Treibhäusern über luftdicht verschließbare innere Schleusen verbunden bzw. versehen. Durch Steuerung dieser Schleusen kann ein Ausgleich der Temperatur der Luft zwischen dem jeweiligen Treibhaus und dem Innenraum der Kammereinrichtungen erfolgen.

In einer anderen besonderen Ausgestaltung können transparente Leitungen innerhalb der Kammereinrichtungen verlegt werden, die in warmen Jahreszeiten Wasser führen und zur zusätzlichen Gewinnung von Warmwasser und/oder zur Kühlung der Außenwände des Bauwerks genutzt werden.

Eine weitere besondere Ausgestaltung der erfindungsgemäßen Dämmvorrichtung besteht darin, an den äußeren Seitenwänden der Kammereinrichtungen, die besonders intensiver Sonnenstrahlung ausgesetzt sind, teilweise dünnschichtige Solarzellen zur Gewinnung elektrischer Energie aufzutragen.

In einer anderen besonderen Ausgestaltung der erfindungsgemäßen Dämmvorrichtung wird die Luft in den Innenräumen der Kammereinrichtungen zusätzlich mittels geothermisch gewonnener Energie temperiert. Durch die Konstruktion der erfindungsgemäßen Dämmvorrichtung kann in weiteren Ausgestaltungen die Wärmeausbeute kommender Innovationen zur energetischen Nutzung von Bauwerkshüllen oder von erneuerbaren Energien ebenfalls einfach über innere Schleusen mit der Luft in den Kammereinrichtungen verbunden werden. Die Erfindung beruht zum einem auf dem Prinzip, dass Luft von unterschiedlichen Temperaturen, Druckverhältnissen und/oder Luftfeuchte innerhalb der Grenzen eines luftdicht begrenzten Systems ihre vorhandenen, energetischen Unterschiede ausgleicht, und zwar gemäß thermodynamischer Gesetze grundsätzlich von hoher zu niedriger Temperatur bzw. Druck bzw. Feuchtigkeit. Sind alle äußeren und inneren Schleusen einer Kammereinrichtung verschlossen, entsteht innerhalb der Kammereinrichtung eine autarke -unabhängig von anderen Kammereinrichtungen und/oder der Außenumgebung selbständig arbeitende- Dämmvorrichtung. Die Luft in dem Innenraum der geschlossenen Kammereinrichtung kann ihre vorhandenen Temperaturunterschiede nur innerhalb der Grenzen der Kammereinrichtung, und zwar von warm nach kalt ausgleichen. In dem Innenraum der Kammereinrichtung kommt es selbsttätig zur gleichmäßigen horizontalen Verteilung der Wärme um alle Außenwände des Bauwerks. Im Ergebnis dessen werden alle inneren Seiten der Kammereinrichtung gleichmäßig temperiert. Außerdem wird durch die geschlossenen Kammereinrichtungen verhindert, dass sich an einer Außenwand des Bauwerks erwärmte Luft im oberen Bereich der Außenwand sammeln kann, da die erwärmte Luft aufgrund der luftdicht geschlossenen Trennwand zur anderen Kammereinrichtung nicht vertikal aufsteigen kann.

Durch dieses Prinzip wird Wärme, die lokal an unbeschatteten Außenwänden auftritt und/oder zusätzlich durch den Treibhauseffekt des transparenten Materials der Wetterhülle gewonnen wird, selbsttätig im Innenraum der geschlossenen Kammereinrichtung horizontal um alle Außenwände verteilt. Auch Transmissionswärme aus dem Innern des Bauwerks, die an den inneren Seiten der Kammereinrichtung austritt, wird selbsttätig im Innenraum der geschlossenen Kammereinrichtung horizontal um alle Außenwände verteilt. Transmissionswärme stellt in der Dämmvorrichtung also keinen Wärmeverlust für das Bauwerk dar, sondern wird zur gleichmäßigen Temperierung kühlerer Außenwände genutzt. Auch der Wärmeverlust an Kältebrücken der inneren Seiten der Kammereinrichtung stellt keinen Energieverlust für das Bauwerk oder Teile desselben dar, da an Kältebrücken austretende Wärme ebenfalls zur gleichmäßigen Temperierung der inneren Seitenwände der geschlossenen Kammereinrichtung genutzt wird.

Durch die Eigenschaften Quellfähigkeit und Wärmeleitfähigkeit der Membranschicht werden die thermischen Effekte in der Dämmvorrichtung und die gleichmäßige Wärmeverteilung an allen Außenwänden des Bauwerks verstärkt. Sowohl die positiven energetischen Effekte der Membranschicht als auch die der Luft in den Kammereinrichtungen werden parallel genutzt, wobei beide Komponenten als thermischer Puffer des anderen dienen und die positiven Effekte beider Komponenten gegenseitig stärken. Dies führt zu einer Verschiebung des Taupunktes nach außen und wirkt einer Schimmelbildung an oder in den Außenwänden der Kammereinrichtungen des Bauwerks entgegen.

Durch gezieltes Öffnen von inneren Schleusen in Trennwänden von Kammereinrichtungen kann das geschlossene Luftsystem, auch Luftvorrichtung genannt, auf mehrere Kammereinrichtungen erweitert werden und ein Temperaturausgleich in der erweiterten Luftvorrichtung, also auch zwischen verschiedenen Kammereinrichtungen des Bauwerks stattfinden. Unter Luftvorrichtung wird im Sinne der Erfindung auch eine Luftsteuerungsvorrichtung oder die erfindungsgemäße Dämmvorrichtung verstanden.

Durch gezieltes Öffnen von inneren Schleusen an den inneren Seiten der Kammereinrichtungen kann die geschlossene Luftvorrichtung um das Luftvolumen von Bauwerksteilen, wie Keller, Hausflure und/oder Dächer, erweitert werden und ein Temperaturausgleich der Luft in der erweiterten Luftvorrichtung stattfinden, das neben der Luft innerhalb der Kammereinrichtungen auch das Luftvolumen von Kellern, Hausfluren und/oder Dächer einbezieht.

Durch gezieltes Öffnen von äußeren Schleusen an den äußeren Seiten der Kammereinrichtungen kann die geschlossene Luftvorrichtung um das Luftvolumen der Außenumgebung erweitert werden und ein Temperaturausgleich der Luft in den Kammereinrichtungen mit dem Luftvolumen der Außenumgebung stattfinden.

So wie durch das gezielte Öffnen von Schleusen in der Dämmvorrichtung die geschlossene Luftvorrichtung zum Temperaturausgleich erweitert wird, kann durch gezieltes Schließen von äußeren und/oder inneren Schleusen der Temperaturausgleich wieder auf reduzierte Luftsysteme begrenzt werden.

Das Prinzip des energetischen Ausgleichs in Richtung von hohem zu niedrigem Niveau gilt innerhalb einer geschlossenen Luftvorrichtung auch für die Luftfeuchtigkeit. Die variable Steuerung der Schleusen in der Dämmvorrichtung wird deshalb auch zum Zwecke des Entfeuchtens und/oder zum Feuchtigkeitsausgleich der Luft genutzt. Durch gezieltes Öffnen bzw. Schließen innerer und/oder äußerer Schleusen der Dämmvorrichtung kann das geschlossene Luftsystem zum Ausgleich von Feuchtigkeit auf eine und/oder mehrere Kammereinrichtungen und/oder Keller und/oder Dächer und/oder die Einbeziehung der Außenumgebung erweitert bzw. begrenzt werden.

Durch die variable und zielgerichtete Diffusionsoffenheit der Membranschicht werden auch die positiven Effekte der Dämmvorrichtung zur Regulierung des Feuchtigkeitshaushaltes des Bauwerks optimiert. Die Diffusionsoffenheit der Membranschicht gewährleistet einerseits, dass eine erhöhte Feuchtigkeit der Außenwände des Bauwerks nach außen in die Kammereinrichtungen abgegeben wird und das Eindringen übermäßiger Feuchtigkeit aus den Kammereinrichtungen in die Außenwände des Bauwerks verhindert wird. Die Feuchtigkeit in den Kammereinrichtungen kann durch Steuerung der äußeren Schleusen an die Außenumgebung abgegeben werden. Die Außenwände werden nicht feucht und dämmen besser. Dies führt zu einer weiteren Verschiebung des Taupunktes nach außen und wirkt einer Schimmelbildung an oder in den Außenwänden des Bauwerks entgegen. Sowohl die positiven Effekte der Regulierung der Feuchtigkeit durch die Membranschicht als auch die der Luft in den Kammereinrichtungen werden parallel genutzt, wobei beide Komponenten als Feuchtepuffer für den anderen dienen. Die erforderliche Bauausgleichsfeuchte der Außenwände bleibt erhalten, überschüssige Feuchtigkeit eliminiert.

Die Erfindung beruht zum anderem auf der variablen Dämmeigenschaft von Luft: Je geringer die Strömungsgeschwindigkeit von Luft ist, desto höher sind ihre Dämmwerte.

Die variablen Dämmwerte von Luft werden in der Dämmvorrichtung einerseits genutzt, um die Außenwände des Bauwerks in den kälteren Monaten durch die Luft in den Kammereinrichtungen zu dämmen. Die Dämmwerte der Luft in den Kammereinrichtungen werden umso höher, je kleiner das geschlossene Luftsystem gewählt wird, in dem die Luft zirkulieren kann. Die höchsten Dämmwerte besitzt die Luft innerhalb der Kammereinrichtungen dann, wenn das geschlossene Luftsystem durch das luftdichte Verschließen aller äußeren und inneren Schleusen der Dämmvorrichtung auf jeweils eine Kammereinrichtung reduziert wird.

Die variablen Dämmwerte von Luft werden auch genutzt, um die Außenwände des Bauwerks in wärmeren Monaten durch die Luft in den Kammerbändern zu kühlen. Die Dämmwerte der Luft in den Kammereinrichtungen werden immer geringer, je größer das geschlossene System gewählt wird, in dem die Luft zirkulieren kann. Die Dämmwerte der Luft in den Kammereinrichtungen sinkt auf ein Minimum, wenn das geschlossene Luftsystem durch das Öffnen äußerer Schleusen die Außenumgebung in das Luftsystem einbezieht. Durch das Öffnen der äußeren und durch Öffnen relevanter innerer Schleusen der Dämmvorrichtung kann ein zielgerichteter "Durchzug" der Luft erzeugt werden. Die Strömungsgeschwindigkeit der Luft bei Durchzug ist so hoch, dass sie keine Dämmeigenschaften mehr besitzt, und zur Abkühlung der Außenwände oder des Kellers, Hausflures und/oder von Dächern des Bauwerks führt.

### Ausführungsbeispiele

Die Zeichnungen zeigen aufgrund der zeichnerischen Vereinfachung in schematischer, stark vergrößerter Weise, ohne Anspruch auf eine maßstabsgetreue Wiedergabe, Ausführungsformen und Weiterentwicklung ohne Beschränkung der Erfindung auf diese in
Fig. 1 den vertikal verlaufenden Längsschnitt durch die an ein Bauwerk angesetzte erfindungsgemäße Dämmvorrichtung,
Fig. 2 den horizontal verlaufenden Schnitt durch eine an ein Bauwerk mit drei Gebäuden angesetzte erfindungsgemäße Dämmvorrichtung,
Fig. 3 Wärmeverteilung innerhalb einer Kammereinrichtung
   und
Fig. 4 den vertikal verlaufenden Längsschnitt durch die an ein Bauwerk angesetzte erfindungsgemäße Dämmvorrichtung mit geöffneten äußeren und inneren Schleusen der erfindungsgemäßen Dämmvorrichtung und Luftzirkulation.

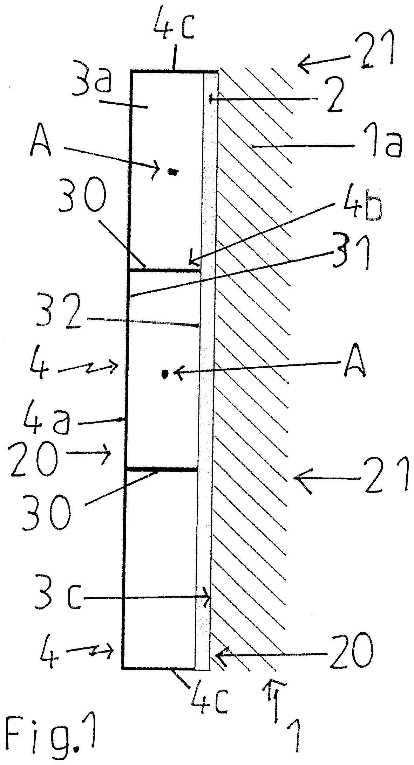

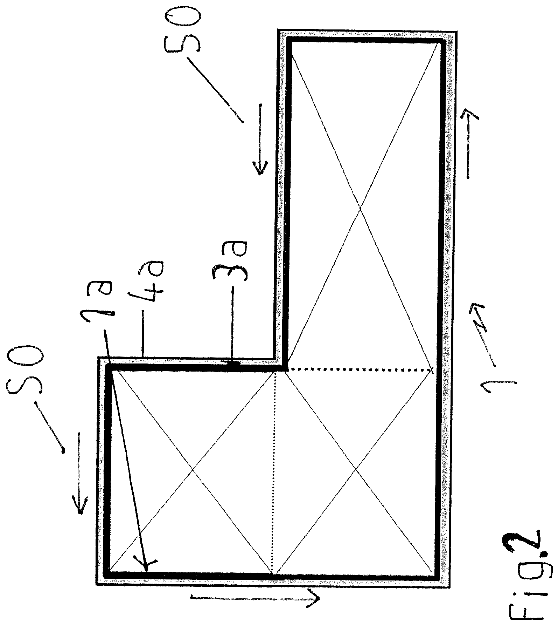

Die erfindungsgemäße Dämmvorrichtung für ein Bauwerk 1 weist in einem Ausführungsbeispiel mehrere an den Außenseiten 3c seiner Außenwänden 1a angeordnete Innenräume 3a umfassende Kammereinrichtungen 4 auf; die Außenseiten 3c der Außenwänden 1a haben vollflächig eine wasserdichte und wasserdampfdurchlässige Beschichtung 2, die die Innenräume 3a zu den Außenseiten 3c hin. Drei Kammereinrichtungen 4 sind aufeinander angeordnet (Fig. 1) und deren Innenräume 3a erstrecken sich in der Umlaufrichtung 50 (Fig. 2 siehe auch Pfeil als beispielhafte Umlaufrichtung) um die Außenwände 1a des Bauwerks 1 und jeder Innenraum 3a in Umlaufrichtung 50 durchgängig ist (Fig. 2 siehe auch Pfeil als beispielhafte Umlaufrichtung), um z.B. die horizontale Luftzirkulation bereitzustellen.

Die drei aufeinander angeordneten Kammereinrichtungen 4 und deren Innenräume sind quer oder annähernd quer zur Lotrechten, wie als Senkrechte oder Lot, verlaufend ausgerichtet; die Innenräume 3a der Kammereinrichtungen 4 sind von äußeren Seitenwänden 4a und den Trennwänden 4b sowie von der Beschichtung 2 seitlich begrenzt; die beiden äußeren Wände 4c, die den Innenraum 3a der oberen Kammereinrichtung 4 im oberen Bereich 21 und den Innenraum 3a der unteren Kammereinrichtung 4 im unteren Bereich 20 seitlich begrenzen, können der Einfachheit halber auch als Trennwände 4b bezeichnet werden. In einem anderen Ausführungsbeispiel kann auch die obere äußere Wand 4c der oberen Kammereinrichtung 4 eine äußere Schleuse 5a auf. In einem anderen Ausführungsbeispiel wird der Innenraum 3a der unteren Kammereinrichtung 4 im unteren Bereich 20 seitlich vom Erdboden begrenzt.

Die Kammereinrichtungen umfassen nach Fig. 1 in einem Ausführungsbeispiel im Längsschnitt eine untere Kammereinrichtung, eine mittlere Kammereinrichtung und eine obere Kammereinrichtung.

In einem weiteren Ausführungsbeispiel verlaufen in Umlaufrichtung 50 die Trennwände 4b, deren den Innenräumen der Kammereinrichtungen 4 zugewandten Seiten 30, die äußeren Seitenwände 4a, deren den Innenräumen der Kammereinrichtungen 4 zugewandten Seiten 3, die den Innenräumen der Kammereinrichtung zugewandten Seiten 32 der inneren Seitenwände 2 oder der Beschichtung 2 quer zu der Lotrechten zur Vermeidung von Luftwiderstand in den Innenräumen und Aufrechterhaltung von Luftzirkulation in den Innenräumen der Kammereinrichtungen 4.

In diesem oder in einem anderen Ausführungsbeispiel erstrecken sich aus demselben Grund im Längsschnitt (Fig. 1) von oben nach unten die Trennwände 4b, deren den Innenräumen der Kammereinrichtungen 4 zugewandten Seiten 30, die äußeren Seitenwände 4a, deren den Innenräumen der Kammereinrichtungen zugewandten Seiten 31, die den Innenräumen der Kammereinrichtung zugewandten Seiten 32 der inneren Seitenwände 2 oder der Beschichtung 2 parallel zu der Lotrechten.

Die äußeren Seitenwände 4a sind lichtdurchlässig ausgebildet, um beispielsweise die in den Innenräumen 3a befindliche Luft 3 infolge Sonneneinstrahlung kostensparend aufheizen zu können. Die Trennwände 4b sind in den oberen Bereichen 21 und den unteren Bereichen 20 der Kammereinrichtungen 4 angeordnet und an t den Außenseiten 3c des Bauwerks 1 luftdicht gekoppelt, so dass die Innenräume 3a von zwei aufeinander angeordneten Kammereinrichtungen 4 jeweils eine gemeinsame Trennwand 4b aufweisen. Die Trennwände 4b weisen in einem Ausführungsbeispiel innere Schleusen 5b zur Steuerung von Luftzirkulation und von Temperatur sowie deren Verlaufs in den Innenräumen 3a der einander benachbarten Kammereinrichtungen 4 auf. Die in den Innenräumen 3a verlaufenden Mitte-Längsachsen A der Kammereinrichtungen 4 sind quer zu der Lotrechten und parallel zueinander ausgerichtet; die Trennwände 4b sind mir ihren die Innenräume 3a begrenzenden Seiten 30 quer zu einer Lotrechten und die äußeren Seitenwände 4a mit ihren die Innenräume 3a begrenzenden Seiten 31 parallel zu der Lotrechten ausgerichtet.

Unter Mitte-Längsachse wird im Sinne der Erfindung eine in Längsrichtung des Innenraums 3a oder der Kammereinrichtung 4 zentriert in der derselben verlaufende Mittellinie auch verstanden; unter Lotrechte wird im Sinne der Erfindung auch eine Senkrechte oder Vertikale, im Wesentlichen als Lot zum Erdmittelpunkt oder annähernd zu demselben weisend, verstanden.

In einem Ausführungsbeispiel ist die, z.B. semipermeable, Beschichtung 2 auf die Außenwände 1 als eine Membranschicht aufgetragen; in einem anderen Ausführungsbeispiel ist die Membranschicht 3b als wärmedämmende Fassadenfarbe ausgebildet, wobei die Fassadenfarbe Teilchen mit wärmedämmenden Eigenschaften hat, vorzugsweise diese Teilchen aus Kork, Hohlkugeln oder Nanokristalle aus Glas oder Keramik und/oder Aerogel enthält.

In weiteren Ausführungsbeispielen weisen die erfindungsgemäßen Dämmvorrichtungen eine oder mehrere Schleusen 5 auf. Die Schleusen 5, die in den äußeren Seitenwänden 4a und/oder in den Trennwänden 4b und/oder in oberen äußeren Wänden 4c angeordnet sein können, ermöglichen eine fein abgestimmte Steuerung des Status in den Innenräumen der Kammereinrichtungen 4 und ermöglichen das kontrollierte Öffnen oder das kontrollierte Verschließen der Innenräume 3a der Kammereinrichtungen 4 je nach Erfordernis.

Die äußeren Seitenwände sind mit äußeren Schleusen 5a zur Steuerung der Luftzirkulation und der Temperatur sowie deren Verlaufs in den Innenräumen 3a der Kammereinrichtungen 4 sowie zum Austausch der Luft der Innenräume 3a der Kammereinrichtungen 4 mit der der Außenumgebung ausgebildet. In einem Ausführungsbeispiel sind die äußeren Seitenwände 4a und die Trennwände 4b als Platten mit einem glasartigen Material oder einem kunststoffartigem Material ausgebildet. In Ausführungsbeispielen ist das kunststoffartige Material PMMA (Polymethylmethacrylat), PC (Polycarbonat) und/oder ETFE (Ethylen-Tetrafluorethylen-Copolymer).

Das Ausmaß des Öffnens und Verschließens der Öffnungen der inneren Schleusen 5b und der äußeren Schleusen 5a mittels deren Schleusenklappen 5e, auch -klappen 5e genannt, erfolgt in einem Ausführungsbeispiel mittels einer Steuereinrichtung, die die von herkömmlichen z.B. in Innenräumen 3a, in Räumen des Bauwerks 1 und außerhalb desselben installierten Sensoreinrichtungen erzeugten Istwerte von Temperatur und Luftfeuchtigkeit mit deren in der Steuereinrichtung eingegebenen Sollwerten, ggf. auf Grundlage einer Zeitschaltung oder der geografischen Lage, vergleicht und im Fall der Abweichung der Istwerte von den von den Sollwerten vorbestimmten Maßgaben Korrekturwerte erzeugt und die den Korrekturwerten entsprechenden Stellgrößen als Signale an die die Lage der Schleusentore 5e, auch als Schleusenklappe bezeichnet, steuernden elektrischen Aggregate weiterleitet. Durch die erfindungsgemäße Dämmvorrichtung wird vorteilhafterweise nicht nur die Außenwandentfeuchtung ermöglicht, sondern auch die Bewegung der Luft und der Verlauf der Temperatur in den Innenräumen 3a entlang der Umlaufrichtung 50, also horizontal, verwirklicht, die je nach Erfordernis ggf. durch die durch innere Schleusen 5b angesteuerte horizontale Bewegung und Verlauf unterstützt werden kann.

Das Ausmaß des Öffnens und Verschließens der Öffnungen der inneren Schleusen 5b und der äußeren Schleusen 5a mittels deren Schleusenklappen 5e erfolgt in einem anderen Ausführungsbeispiel mittels einer Steuereinrichtung oder Steuerungs-Einrichtung,, die mittels drahtloser Fernsteuerung manuell oder automatisch die Lage der Schleusentore 5e an die diese steuernden elektrischen Aggregate weiterleitet.

In einem ganz anderen Ausführungsbeispiel der erfmdungsgemäßen Dämmvorrichtung sind in den Innenräumen 3a Schleusen 5 als Innenraumschleusen angeordnet, die die Luft-, Temperatur, Feuchtigkeitszirkulation innerhalb der Innenräume 3a, falls erforderlich, ebenso anzusteuern vermögen.

Die Innenräume 3a der Kammereinrichtungen 4 sind in einem Ausführungsbeispiel mittels geothermisch gewonnener Energie und/oder anderen erneuerbaren Energien aufheizbar. Transparente Leitungen zur Erwärmung derselben sind in einem anderen Ausführungsbeispiel in den Innenräume 3a der Kammereinrichtungen 4 angeordnet, die je nach Jahreszeit mit Wasser befüllt sind zur Gewinnung von Warmwasser und/oder zur Kühlung der Außenwände des Bauwerks. In einem zusätzlichen Ausführungsbeispiel sind Gewächshäuser, Wintergärten und/oder sonstige Treibhäuser über luftdicht verschließbare innere Schleusen 5b mit den Innenräumen 3a der Kammereinrichtungen 4 verbunden. Die inneren Schleusen 5b ermöglichen auch den kontrollierten Austausch von Luft, Temperatur, Feuchtigkeit innerhalb der Innenräume aufeinander angeordneter Kammereinrichtungen, wie in Fig. 1 gezeigt.

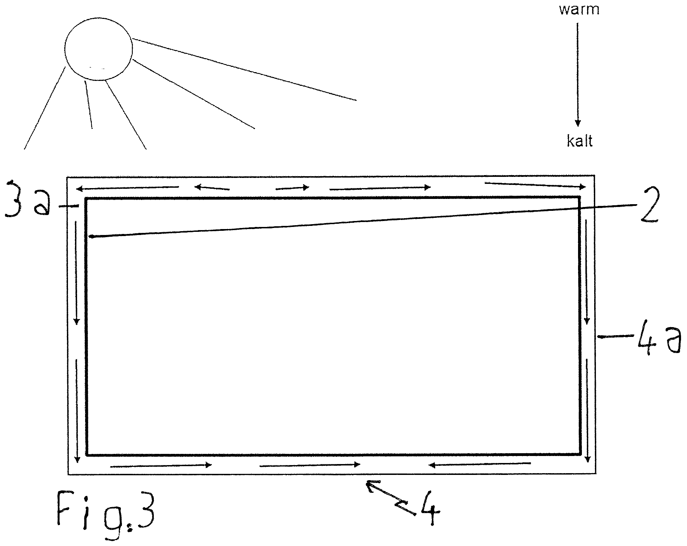

In einem Ausführungsbeispiel wird gegen die Außenseiten 3c der Außenwände 1a des Bauwerkes eine wasserdichte und wasserdampfdurchlässige Beschichtung 2 aufgetragen, werden die die Seitenwände 4a aufweisenden Kammereinrichtungen 4 mit ihren Trennwänden 4b in Form von farblos transparenten Platten oder farblos transparenten Folien gegen die Beschichtung 2 der Außenseiten 3c angesetzt und luftdicht die Trennwände 4b an den Außenseiten 3c der Außenwände 1a verklebt oder auf sonstige dem Fachmann bekannte Weise an diese gekoppelt, so dass die Kammereinrichtungen 4 mit ihren Innenräume 3a quer zur Lotrechten ausgerichtet und in Umlaufrichtung 50 um die Außenwände 3a des Bauwerks 1 -ohne Unterbrechung (siehe auch Fig. 3) sich erstrecken, die Luftzirkulation, die Temperatur und die Feuchtigkeit in den Innenräumen 3a der Kammereinrichtungen 4 und zwischen denselben über die in den Trennwänden 4b befindlichen inneren Schleusen 5b und die in den äußeren wasserdichten, wasserdampfdurchlässigen Seitenwänden 4a angeordnete äußeren Schleusen 5a angesteuert werden. Die Innenräume 3a der Kammereinrichtungen 4 werden vorteilhafterweise von den Trennwänden 4b, den äußeren Seitenwänden 4a und der Beschichtung 2 begrenzt, wobei der Innenraum der oberen Kammereinrichtung 4 zusätzlich von der oberen äußeren Wand 4c und /oder der der unteren Kammereinrichtung 4 zusätzlich von der unteren äußeren Wand 4c begrenzt sein können.

Fig. 1 zeigt den, vorzugsweise entlang der Lotrechten verlaufenden, Längsschnitt der erfindungsgemäßen Dämmvorrichtung mit der angesetzten Membranschicht 2 und angeordneten Kammereinrichtungen 4, die durch Trennwände 4b etagenweise getrennt übereinander angeordnet sind. Wie Fig. 1 darstellt, ist die Membranschicht 2 außen auf der ursprünglichen Außenwand des Bauwerks 1 angebracht. Bei der Membranschicht 2 handelt es sich um einen Anstrich der Fassade, der alle Eigenschaften aufweist, die an einen Außenanstrich von Bauwerken üblicherweise gestellt werden:
- optische Aufwertung durch farblichen Anstrich,
- Schutz gegen das Eindringen von Wasser,
- Verhinderung von Algenbildung,
- witterungsresistent und resistent gegen Umweltbelastungen,
- hohe Elastizität zur Verhinderung von Rissbildung.

Als Material der Membranschicht 2 eignen sich auch sogenannte Dämmfarben. Im Unterschied zu herkömmlichen Fassadenfarben werden den Dämmfarben Zusatzstoffe beigemischt, wie beispielsweise Aerogel, Kork oder Hohlkugeln bzw. Kristalle aus Keramik oder Glas. Durch Nutzung von Dämmfarben, beispielsweise mit Teilchen aus keramischen Hohlkugeln, weist die Membranschicht 2 zusätzlich Eigenschaften auf, wie
- eine hohe Wärmeverteilfähigkeit zum wärmeregulierenden Ausgleich der Ausdehnung der Baumaterialien,
- Quellfähigkeit, um unterschiedliche Feuchtigkeitshaushalte der Außenwände zu kompensieren,
- variable Diffusionsoffenheit, um die erforderliche Bauausgleichsfeuchte zu bewahren,
- gerichtete Diffusionsoffenheit, um übermäßige Feuchte aus der Bauwerkssubstanz nach außen zu leiten.

Darüber hinaus bewirkt die gerichtet diffusionsoffene Membranschicht 2, dass übermäßige Feuchte oder Feuchtigkeit in den Außenwänden des Bauwerks selbsttätig nach außen abgeleitet wird und ein Eindringen von Wasser von außen in die Außenwand 1 wirkungsvoll verhindert wird. Die Membranschicht 2 wirkt im Gegensatz zu der in der Druckschrift FR 2 709 319 - A1 offenbarten herkömmlichen Lehre somit der Schimmelbildung entgegen.

Die Membranschicht 2 bildet die innere Seite oder innere Seitenwand 32 der Kammereinrichtungen 4, die etagenweise aufeinander angeordnet sind. Sie sind quer zur Lotrechten in Isolierstellung als seitliche Begrenzung der Innenräume 3a verlaufend ausgerichtet. Die Luft 3 innerhalb der Kammereinrichtungen 4 dient hauptsächlich dazu, das Bauwerk 1 entsprechend der klimatischen Verhältnisse zu dämmen oder zu kühlen und/oder zu klimatisieren.

Als Material der äußeren Seitenwände 4a und der Trennwände 4b der Kammereinrichtungen 4 eignet sich Glas oder transparentes Kunststoff-Material, beispielsweise Architekturfolie mit oder aus ETFE. Die Architekturfolie kann mindestens an den äußeren Seitenwänden 4a zweischichtig ausgelegt werden, um die Dämmwerte zu erhöhen.

Durch eine farblos transparente Ausgestaltung der Architekturfolie wird je nach Sonnenstand ein maximaler Treibhauseffekt erzeugt, der die Luft 3 innerhalb der Kammerbänder 4 lokal erwärmt. Die lokal erwärmte Luft 3 innerhalb jeder Kammereinrichtung 4 wird horizontal und ungehindert um alle Außenwände des Bauwerks 1 umgewälzt. Das Bauwerk 1 kann aus einem Gebäude, aber auch aus mehreren neben oder aneinander stehenden Gebäuden bestehen. Ein Bauwerk wird im Sinn der erfindungsgemäßen Dämmvorrichtung durch die Anzahl der Gebäude definiert, die gemeinsam von einer erfindungsgemäßen Dämmvorrichtung umschlossen werden.

Fig. 2 zeigt exemplarisch ein Bauwerk 1, das drei neben bzw. aneinander stehende Gebäude beinhaltet, um die sich eine erfindungsgemäße Dämmvorrichtung erstreckt. Lokale Wärme an Außenwänden des Bauwerks 1 wird durch die wärmeleitfähige Eigenschaft der Membranschicht 2 an kältere Außenwände weitergeleitet, was die gleichmäßige Temperierung aller Außenwände der Gebäude innerhalb des Bauwerks 1 unterstützt. Das natürliche Streben von Luft nach einem energetischen Gleichgewicht in einer geschlossenen Luftvorrichtung oder in einem geschlossenen Luftsystem führt dazu, dass durch ein selbsttätig horizontales Umwälzen der Luft um alle Außenwände des Bauwerks 1 innerhalb der Luftschicht 3 der Kammereinrichtungen 4 die Außenwände aller Gebäude des Bauwerks 1 gleichmäßig temperiert werden.

In Fig. 3 ist dargestellt, dass der Treibhauseffekt der äußeren Seitenwände 4a der Kammereinrichtungen 4 zusätzlich ganzjährig Wärmegewinne, je nach den klimatischen Bedingungen, für das Bauwerk 1 bereitstellt. Diese Wärmegewinne werden durch die Luftschicht 3 der Kammereinrichtungen 4 ebenfalls an alle Außenwände des Bauwerks verteilt. Saisonal werden zudem die Wärmeverluste, die in Heizperioden üblicherweise in Form von Transmissionswärme aus dem Innern des Bauwerks an Außenwänden desselben austreten, über die Luft 3 in den Innenräumen der Kammereinrichtungen 4 selbsttätig an kühlere Außenwände weiterleitet. Dort sorgen sie für zusätzliche Wärmegewinne für das Bauwerk.

Vorteile: Die Membranschicht 2 und die Luftschicht 3 der Kammereinrichtungen 4 arbeiten selbsttätig, parallel, unabhängig voneinander und ergänzen sich optimal bei der gleichmäßigen Flächentemperierung der Außenwände des Bauwerks 1. Darüber hinaus bilden sie einen thermischen Puffer für die jeweils andere Schicht. Die thermischen Eigenschaften beider Schichten führen dazu, dass sich der Taupunkt weiter nach außen verlagert, was einer Schimmelbildung im Bauwerk entgegenwirkt.

Die Pufferung von Feuchte durch die Quellfähigkeit der Membranschicht 2 sowie ihre variable und ihre gerichtete Dampfdiffusionsoffenheit wirken ebenfalls positiv auf die energetischen Effekte des Verfahrens. Sie verhindern eine Kondensatbildung innerhalb der Luftschicht 3.

Ein Unterschied und wesentlicher Vorteil gegenüber anderen Dämmverfahren besteht darin, dass die energetischen und klimatischen Effekte hauptsächlich durch eine natürliche Verteilung an alle Außenwände des Bauwerks 1 erreicht wird.

Vorteil: Weitere, zusätzliche oder nachträglich angebrachte Technik und/oder Anlagen und/oder Lüftungssystems im oder an den Gebäuden des Bauwerks, um die Außenwände zu dämmen, zu temperieren und/oder zu lüften sind für die erfindungsgemäße Dämmvorrichtung nicht erforderlich.

In einem Ausführungsbeispiel der erfindungsgemäßen Dämmvorrichtung und des kostengünstiges Verfahren werden die Kammereinrichtungen 4 gegen die Beschichtung 2 angesetzt, so dass die Beschichtung 2, neben z.B. den Trennwänden 4b, den äußeren Wänden 4c, den äußeren Seitenwänden 4a, wie auch den Schleusen 5, die Innenräume 3a der Kammereinrichtungen 4 vorteilhafterweise auch begrenzt: die luftdicht an die Beschichtung 2 mit Trennwänden 4a und äußeren Wänden 4c angesetzten Kammereinrichtungen 4 sind an der Außenwand 1a, wie deren Außenseiten 3c, gekoppelt. Ebenso können in einem anderen Ausführungsbeispiel der erfindungsgemäßen Dämmvorrichtung und des kostengünstiges Verfahren werden die Kammereinrichtungen 4 gegen die Beschichtung 2 angesetzt, wenn beispielsweise lediglich die Außenseiten 3c soweit mit der Beschichtung 2 versehen werden, dass die Beschichtung 2 nur die Innenräume 3a der an die Beschichtung 2 angesetzte Kammereinrichtungen 4 begrenzen. Die Trennwände und die äußeren Wände 4c derselben werden an die die Beschichtung 2 seitlich begrenzenden, wie den an der Beschichtung 2 benachbarten, Abschnitte der Außenseiten 3a der Außenwänden 1a angesetzt, welche Abschnitte keine Beschichtung 2 aufweisen, und die Trennwände 4a und die äußeren Wände 4c luftdicht an den Außenwänden 1a, wie deren Außenseiten 3c, gekoppelt; die Innenräume 3a der Kammereinrichtungen 4 werden vorteilhafterweise auch von der Beschichtung 2, neben z.B. den Trennwänden 4b, den äußeren Wänden 4c, den äußeren Seitenwänden 4a, wie auch den Schleusen 5, begrenzt.

Ein weiterer Vorteil der erfindungsgemäßen Dämmvorrichtung besteht in der luftdichten Trennung der Kammereinrichtungen 4 voneinander mittels der Trennwände 4b. Im Ausführungsbeispiel erfolgt die luftdichte Trennung der Kammereinrichtungen 4 über die Trennwände 4b etagenweise. Sind die Kammereinrichtungen 4 zur Außenumgebung und zu den anderen Kammereinrichtungen 4 luftdicht verschlossen, entsteht ein autark arbeitendes Dämmsystem innerhalb der Kammereinrichtung, das zur Außenumgebung und zu den anderen Kammereinrichtungen abgegrenzt ist. Lokal erwärmte Luft 3 im Innenraum 3a der geschlossenen Kammereinrichtung 4 kann ihre vorhandenen Temperaturunterschiede nur innerhalb der Grenzen der eigenen Kämmereinrichtung ausgleichen. Im Innenraum der Kammereinrichtung 4 kommt es selbsttätig zur horizontalen Verteilung der lokalen Wärme um alle Außenwände des Bauwerks 1. Im Ergebnis dessen werden alle inneren Seiten 2 der Kammereinrichtung gleichmäßig temperiert. Es wird durch geschlossene Kammereinrichtungen 4 auch verhindert, dass sich an einer Außenwand des Bauwerks 1 erwärmte Luft im oberen Bereich der Außenwand sammeln kann, denn die erwärmte Luft kann nicht vertikal durch die luftdicht geschlossene Trennwand zu einer anderen Kammereinrichtung 4 aufsteigen. In einem Ausführungsbeispiel wird das vollständige Umwälzen der Luft innerhalb der Luftschichten 3 in horizontaler Richtung nicht unterbunden, jedoch in vertikaler Richtung beschränkt.

Vorteil: Durch die horizontal luftdichte Trennung der Kammereinrichtungen 4 wird an einer Außenwand mit starker lokaler Erwärmung einer Überhitzung im oberen Teil der Außenwand entgegengewirkt, da die Wärme der Luft 3 nicht unbegrenzt vertikal transportiert werden kann. Sie wird durch die luftdichte Trennung der Trennwände 4b horizontal umgelenkt.

Weiterer Vorteil: Die etagenweise Trennung der Kammereinrichtungen 4 führt dazu, dass die üblichen hohen Temperaturunterschiede zwischen den kälteren Erdgeschosswohnungen und den wärmeren Dachgeschosswohnungen einer Immobilie ausgeglichen werden.

Neben der selbsttätigen Wärmeverteilung in der erfindungsgemäßen Dämmvorrichtung, kann auch der Ausgleich unterschiedlicher Druck- und Feuchteverhältnisse innerhalb eines Luftsystems durch angeordnete Schleusen 5 in der erfindungsgemäßen Dämmvorrichtung gesteuert und/oder beschleunigt werden.

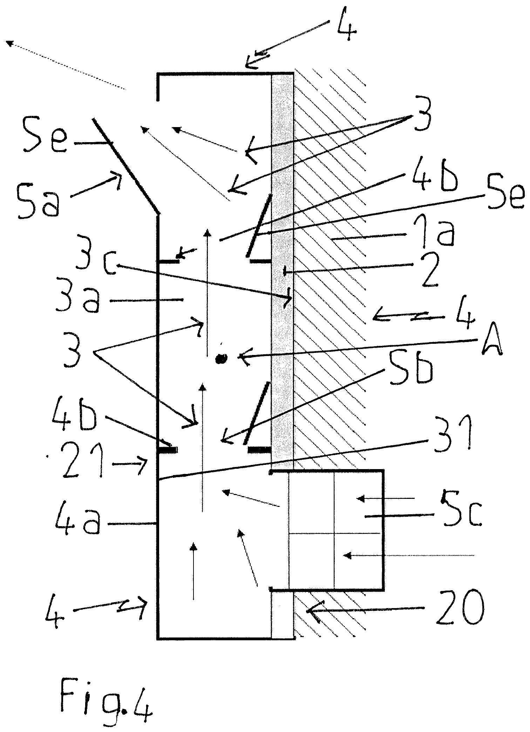

Fig. 4 zeigt die Schleusentypen der erfindungsgemäßen Dämmvorrichtung: In den äußeren Seitenwänden 4a der Kammereinrichtungen 4 sind äußere Schleusen 5a angeordnet. Ihre Steuerung bewirkt, dass die Luft 3 innerhalb der Kammereinrichtungen 4 zur Außenumgebung über äußere Schleusen 5a gelangen kann bzw. luftdicht von der Außenluft getrennt wird. In den Trennwänden 4b der Kammereinrichtungen 4 sind die inneren Schleusen 5b der Trennwände 4b angeordnet. Ihre Steuerung bewirkt, dass die Luft 3 einer Kammereinrichtung mit der Luft 3 in anderen Kammereinrichtungen 4 zirkulieren kann oder von ihr luftdicht getrennt wird.

Darüber hinaus werden Fenster von Kellern, Hausfluren und/oder Dächern durch eine gegenüberliegende vollständig verschlossene äußere Seitenwand 4a der Kammereinrichtung 4 luftdicht zur Außenumgebung verschlossen. Werden die Fenster geöffnet, kann die Luft aus den Kellern, Hausfluren und/oder Dächern nicht in die Außenumgebung, sondern nur in die Luftschicht 3 der Kammereinrichtung 4 gelangen, so dass die Fenster zu inneren Schleusen 5c der inneren Seitenwände 2 der Kammereinrichtungen 4 umfunktioniert werden können.

Alle vorhandenen Schleusen 5 der erfindungsgemäßen Dämmvorrichtung können variabel, unabhängig voneinander und zweckorientiert geöffnet bzw. luftdicht verschlossen werden. Die Steuerung kann manuell erfolgen, vorzugsweise jedoch mindestens automatisch erfolgen, beispielsweise durch eine Zeitschaltung, die saisonale Sonnenstände berücksichtigt. Eine digitale Steuerung über die Auswertung relevanter Messwerte innerhalb und außerhalb der erfindungsgemäßen Dämmvorrichtung, beispielsweise über eine intelligente SMART-Steuerung sollte jedoch bevorzugt werden und wird im folgenden Ausführungsbeispiel vorausgesetzt.

Ein Öffnen äußerer Schleusen 5a dient vorrangig dazu, Wärmeüberschuss der Luft 3 in Kammereinrichtungen 4 in die Außenumgebung abzuleiten. Das Öffnen geht jedoch immer auch mit Wärmeverlusten für das Bauwerk 1 einher. Wird zeitweilig lokaler Wärmeüberschuss an einer Außenwand des Bauwerks 1 hervorgerufen, sei es durch den Treibhauseffekt der äußeren Seitenwände 4a der Kammereinrichtungen 4 und/oder durch Transmissionswärme aus dem Innern des Bauwerks, wird er in der erfindungsgemäßen Dämmvorrichtung vorrangig innerhalb der Membranschicht 1 und/oder der Luftschicht 3 an kühlere Außenwände des Bauwerks 1 verteilt. Somit wird der lokale Wärmeüberschuss wesentlich reduziert oder verhindert. Ein Öffnen äußerer Schleusen 5a zur Ableitung überschüssiger Wärme in die Außenumgebung wird durch die Wärmeverteilung der erfindungsgemäßen Dämmvorrichtung verzögert oder nicht erforderlich, was zur Verringerung von Wärmeverlusten für das Bauwerk 1 führt.

Der Treibhauseffekt der jeweils sonnenzugewandten Seiten des Bauwerks kann durch die Wärmeverteilung auch direkt zur Temperierung der Nordseiten der Kammereinrichtungen des Bauwerks 1 genutzt werden, ohne die gewonnene Wärme durch das Innere des Bauwerks oder von Teilen desselben leiten zu müssen. Durch kurzzeitiges Öffnen äußerer Schleusen 5a an den äußeren Seiten 4a, die der sonnenzugewandten Seite gegenüber liegen, kann die Wärmeverteilung über die Luftschicht 3 innerhalb der Kammereinrichtungen 4 beschleunigt werden.

Durch gezieltes Öffnen von inneren Schleusen 5b in Trennwänden 4b von Kammereinrichtungen 4 kann das geschlossene System, in dem sich die Luft 3 einer Kammereinrichtung 4 befindet, auf mehrere Kammereinrichtungen 4 erweitert werden. Der Temperaturausgleich der Luft 4 der Kammereinrichtung 4 kann in dem erweiterten Luftsystem auch zwischen verschiedenen Kammereinrichtungen 4 stattfinden.

Durch gezieltes Öffnen von inneren Schleusen 5c an den inneren Seiten 2 der Kammereinrichtungen 4 kann das geschlossene Luftsystem um das Luftvolumen von Bauwerksteilen, wie Keller, Hausflure und/oder Dächer, erweitert werden und ein Temperaturausgleich von Luft in der erweiterten Vorrichtung stattfinden, dass neben der Luft 3 innerhalb der Kammereinrichtungen 4 auch das Luftvolumen von Kellern, Hausfluren und/oder Dächer einbezieht.

Durch gezieltes Öffnen von äußeren Schleusen 5a an den äußeren Seiten 4a der Kammereinrichtungen 4 kann das geschlossen Luftsystem um das Luftvolumen der Außenumgebung erweitert werden und ein Temperaturausgleich der Luft 3 in Kammereinrichtungen 4 mit dem Luftvolumen der Außenumgebung stattfinden.

So wie durch das gesteuerte Öffnen von Schleusen 5 in der Dämmvorrichtung die jeweils geschlossene Luftvorrichtung zum Temperaturausgleich erweitert wird, kann durch gezieltes Schließen von äußeren und/oder inneren Schleusen 5a, 5b, 5c der Dämmvorrichtung der Temperaturausgleich wieder auf reduzierte Luftsysteme begrenzt werden.

In einem weiteren Ausführungsbeispiel wird die erfindungsgemäße Dämmvorrichtung zur Klimatisierung und/oder Kühlung der Außenwände oder zum Abtrocknen der Außenwände genutzt. Hierfür wird die Eigenschaft der Luft genutzt, unterschiedliche Dämmwerte in Abhängigkeit von ihrer Strömungsgeschwindigkeit zu besitzen.

Für die Dämmung des Bauwerks 1 wird die Zirkulation der Luft 3 der Kammereinrichtungen 4 auf ein Minimum reduziert, in dem durch die geschlossenen Schleusen 5 der Kammereinrichtung die kleinste Luftvorrichtung für die Luft 3 der Kammereinrichtungen 4 erzeugt wird.

Wird die erfindungsgemäße Dämmvorrichtung dagegen für die Klimatisierung und/oder Kühlung und/oder Trocknung der Außenwände genutzt, wird die Strömungsgeschwindigkeit der Luft 3 innerhalb der Kammereinrichtungen 4 auf ein Maximum erhöht, in dem alle inneren und äußeren Schleusen 5 der Kammereinrichtungen 4 geöffnet werden, so dass ein "Durchzug" entsteht. Die Luft 3 der Kammereinrichtungen 4 wird zur Außenumgebung abgeleitet. Die Strömungsgeschwindigkeit der Luft 3 der Kammereinrichtungen wird durch den Durchzug so hoch, dass sie keine Dämmeigenschaften mehr besitzt, was zur Abkühlung, Klimatisierung und/oder Trocknung der Außenwände des Bauwerks 1 führt und auch zur Unterstützung der Entfeuchtung anderer Bauteile, wie Keller und/oder Hausflure genutzt werden kann.

Fig. 4 zeigt, wie durch verschiedene geöffnete innere und äußere Schleusen 5a, 5b, 5c der erfindungsgemäßen Dämmvorrichtung ein Durchzug in der erfindungsgemäßen Dämmvorrichtung und der Luftaustausch der Luft 3 mit der Luft der Außenumgebung hergestellt werden kann.

Vorteile: Saisonal kann die Dämmvorrichtung dazu genutzt werden, überhitzte Dächer oder Dachgeschosswohnung abzukühlen, in dem durch Öffnen der Schleusen 5, wie der inneren und äußeren Schleusen 5a, 5b, die Temperatur der Luft aus dem oberen Bereich des Bauwerks 1, in Dächern oder/ und Hausfluren, zu den unteren kühleren Außenwänden und/oder in den Keller und/oder in die Außenumgebung geleitet wird.

Ein weiteres Ausführungsbeispiel zeigt zusätzliche Wärmegewinne durch das Öffnen von nur inneren Schleusen 5b, 5c der erfindungsgemäßen Dämmvorrichtung. Da in Kellern auch in kalten Jahreszeiten die Temperaturen nicht unter den Gefrierpunkt sinken (ca. konstant 5°C) führt das Öffnen der inneren Schleusen 5b der Trennwände 4b und der Kellerfenster, die zu inneren Schleusen 5c umfunktioniert sind, an den Tagen und Nächten, an denen die Außentemperaturen unter den Gefrierpunkt sinken, zum Temperaturausgleich der Luft 3 der Kammereinrichtungen 4 mit dem Luftvolumen des Kellers. So wird gewährleistet, dass die Temperatur der Luft 3 in den Kammereinrichtungen 4 nicht unter die Kellertemperatur absinken kann. Dadurch können die Außenwände des Bauwerks nicht unter ca. 5°C abgekühlt werden. Je weniger die Außenwände des Bauwerks 1 abkühlen, umso geringer ist der Heizbedarf im Innenraum 3a der Kammereinrichtungen des Bauwerks 1, um sie wieder aufzuheizen.

Weitere Vorteile: Die Eigenschaften Quellfähigkeit und Wärmeleitfähigkeit der Membranschicht 2 verstärken die thermischen und energetischen Effekte der Dämmvorrichtung. Sowohl die positiven energetischen Effekte der Membranschicht 2 als auch die der Kammereinrichtungen 4 werden parallel genutzt, wobei beide Komponenten als thermischer und/oder als Feuchtigkeitspuffer der anderen dienen und die positiven Effekte beider Komponenten gegenseitig verstärken.

Eine einzige Dämmvorrichtung kann mehrere Gebäude des Bauwerks umschließen, kann aber auch durch die horizontal angeordneten Kammereinrichtungen, nur für eine Etage eines Gebäudes in Form einer einzelnen Kammereinrichtung aufgebaut werden.

In einem weiteren Ausführungsbeispiel werden Gewächshäuser und/oder Wintergärten und/oder andere Treibhäuser über luftdicht verschließbare innere Schleusen 5b, 5c mit den Kammereinrichtungen 4 der erfindungsgemäßen Dämmvorrichtung verbunden. Durch Öffnen der Schleusentore bzw. -klappen 5e der Schleusen 5 wird ein zusätzlicher Ausgleich der Temperatur der Luft zwischen dem jeweiligen Treibhaus und dem Innenraum 3a der Kammereinrichtungen 4 herbeigeführt.

In einer weiteren Ausführung werden wasserführende Leitungen in den Kammereinrichtungen verlegt, die saisonal zur zusätzlichen Gewinnung von Warmwasser und/oder zur Kühlung der Außenwände des Bauwerks 1 genutzt werden.

Aufgrund der Konstruktion der erfindungsgemäßen Dämmvorrichtung können Ausführungen erfolgen, die auf einfachem Weg weitere energetische Innovationen in die Dämmvorrichtung einbeziehen: So können an äußeren Seitenwänden 4a der Kammereinrichtungen 4, die besonders intensiver Sonnenstrahlung ausgesetzt sind, teilweise dünnschichtige Solarzellen zur Gewinnung elektrischer Energie aufgetragen werden. In einem weiteren Ausführungsbeispiel wird die Luft 3 in den Innenräumen der Kammereinrichtungen 4 zusätzlich mittels geothermisch gewonnener Energie und/oder andere erneuerbarer Energien temperiert. Weitere zukünftige Innovationen, die erneuerbare Energien nutzen, um beispielsweise den Wärmebedarf von dem Bauwerk zu trennen, können einfach über innere Schleusen mit der Luft 3 in den Kammereinrichtungen 4 verbunden werden.

In einem Ausführungsbeispiel ist das Verfahren zur dauerhaften Isolierung von Gebäudeeinheiten gegenüber Temperaturverlusten, vorzugsweise aus Aufheizung der Gebäude, und zur gleichmäßigen Temperierung aller Außenwände der Gebäudeeinheit 1, gekennzeichnet durch
die gegen die Außenwand 1a angesetzte erfindungsgemäße Dämmvorrichtung mit der gegen die Außenwände 1a angesetzten Membranschicht 2 und Kammereinrichtungen 4,
die Wärmeleitfähigkeit der Membranschicht 2, die für eine allseitige und gleichmäßige Temperierung der Außenwände 1a des Bauwerks 1 sorgt und/oder die Ausdehnungen der Baumaterialien wärmeregulierend ausgleicht,
und/oder
die warme Luft, die lokal an Außenwänden 1a auftritt und selbsttätig an kühlere Außenwände des Bauwerks 1 verteilt wird,
lokal erwärmte Luft 3 im Innenraum 3a einer Kammereinrichtung 4, die je nach klimatischen Verhältnissen aus Solarenergie und/oder saisonal aus Transmissionswärme aus dem Innern des Bauwerks 1 an den Außenwänden 1a desselben 1 verursacht wird, und die zum Temperaturausgleich mit unbeschatteten und/oder kühleren Außenwänden 1a selbsttätig horizontal im Innenraum 3a der Kammereinrichtung 4 um die Außenwände 1a umgewälzt wird,
die angesetzte Membranschicht 2 und die Luft 3 im Innenraum 3a der Kammereinrichtung 4, die jeweils einen thermischen Puffer für die anderen bilden,
die variable Steuerung der in den äußeren Seitenwänden 4a angeordneten äußeren Schleusen 5a, die die Luftzirkulation und den Temperaturausgleich der Luft 3 innerhalb der Kammereinrichtung 4 beschleunigt und/oder einen Luftaustausch mit der Außenumgebung ermöglichen,
die variable Steuerung der in den Trennwänden 4b angeordneten inneren Schleusen 5b, die die Luftzirkulation und einen Temperaturausgleich zwischen mindestens zwei Kammereinrichtungen 4 möglich machen
und/oder
die variable Steuerung durch Öffnen bzw. Schließen der inneren Schleusen 5c der inneren Seiten 2 der Kammereinrichtungen 4, die die Luftzirkulation und einen Temperaturausgleich der Luft innerhalb der Kammereinrichtung 4 mit dem Luftvolumen in Gebäudeteilen, wie Kellern, Hausfluren und/oder Dächern ermöglichten.

In einem anderen Ausführungsbeispiel ist das erfindungsgemäße Verfahren gekennzeichnet durch die Dämmvorrichtung mit einer an den Außenwänden 1a angesetzten Membranschicht 2 und angeordneten Kammereinrichtungen 4, wobei die Quellfähigkeit der Membranschicht 2 unterschiedliche Feuchtigkeitshaushalte der Außenwände der Gebäudeeinheit 1 kompensieren können, die variabel wasserdampfdiffusionsoffene Membranschicht 2 die erforderliche Bauausgleichsfeuchte bewahrt, wobei
die gerichtet wasserdampfdiffusionsoffene Membranschicht 2 übermäßige Feuchtigkeit aus der Bauwerkssubstanz nach außen ableitet,
die gerichtet wasserdampfdiffusionsoffene Membranschicht 2 das Eindringen von Feuchtigkeit von außen in die Bauwerkssubstanz verhindert,
die gegenseitige thermische Pufferung der angesetzte Membranschicht 2 und der Luft 3 im Innenraum 3a der Kammereinrichtung 4 den Taupunkt nach außen verschiebt,
die lokal erhöht auftretende Luftfeuchtigkeit in dem Innenraum 3a einer Kammereinrichtung 4 selbsttätig sich mit niedrigerer Luftfeuchtigkeit innerhalb der Kammereinrichtung 4 ausgleicht,
die variable Steuerung der in den äußeren Seitenwänden 4a angeordneten äußeren Schleusen 5b den Feuchtigkeitsaustausch der Luft 3 in den Kammereinrichtung 4 mit der Außenumgebung ermöglicht,
die variable Steuerung der in den Trennwänden 4b angeordneten inneren Schleusen 5b den Feuchtigkeitsausgleich der Luft 3 zwischen mindestens zwei Kammereinrichtungen 4 ermöglicht,
die variable Steuerung durch Öffnen bzw. Schließen innerer Schleusen 5b, 5c an den inneren Seitenwänden 2 der Kammereinrichtungen 4 die Luftfeuchtigkeit im Innenraum 3a der Kammereinrichtungen 4 mit der Luftfeuchtigkeit in Bauwerksteilen, wie Kellern, Hausfluren und/oder Dächern ermöglicht
und/oder
ein gleichzeitiges Öffnen der äußeren Schleusen 5a der äußeren Seiten 4a und der inneren Schleusen 5b der Trennwände 4b der Kammereinrichtungen 4 für "Durchzug" an den inneren Seitenwänden 2 der Kammereinrichtungen 4 sorgt und
zu hohe Feuchtigkeit der Luft 3 im Innenraum 3a der Kammereinrichtung 4 in die Außenumgebung ableitet und
für Trocknung der Außenwände des Bauwerks sorgt und
die Außenwände 1a des Bauwerks 1 klimatisiert,
das zusätzliche Öffnen der inneren Schleusen 5c der inneren Seiten 2 für "Durchzug" in den Bauwerksteilen, wie Keller, Hausfluren und/oder Dächern sorgt
und
zu hohe Feuchtigkeit in diesen Bauwerksteilen über den Weg über das Innere der Kammereinrichtungen 4 in die Außenumgebung ableitet und / oder
die Trocknung von Bauwerksteilen, wie Keller, Hausflure und/oder Dächer unterstützt.

Vorteile der erfindungsgemäßen leicht verlegbaren Dämmvorrichtung für ein Bauwerk 1 mit an den Außenwänden angebrachter Membranschicht 2 und angeordneten Kammereinrichtungen 4, des erfindungsgemäßen kostengünstigen Verfahrens zur dauerhaften Isolierung von Bauwerken, des erfindungsgemäßen Bauwerks sind unter Anderem:
die Verringerung des Energiebedarfs im Inneren des Bauwerks,
die Regulierung der Feuchtigkeit der Bauwerkshüllen,
die Vermeidung und Reduzierung von Schimmelbildung,
die Klimatisierung des Bauwerks,
die Gewinnung und die dauerhafte Nutzung von Solarenergie in Abhängigkeit von klimatischen Verhältnissen,
die Bereitstellung eines ästhetischen optischen Gesamteindrucks,
die geringen Betriebskosten und die Langlebigkeit der erfindungsgemäßen Dämmvorrichtung, ohne kostenintensive nachfolgende Investitionen,
die einfache Einbindung potentieller energetischer Innovationen in die Dämmvorrichtung,
die Anwendbarkeit für Bauwerke unabhängig von Alter, Größe und Art der Nutzung des Bauwerks.

### Bezugszeichenliste

- 1: Bauwerk
- 1a: Außenwand
- 2: Beschichtung, Membranschicht, innere Seitenwand oder innere Seite der Kammereinrichtung
- 3: im Innenraum befindliche Luft
- 3a: Innenraum
- 3c: Außenseite
- 4: Kammereinrichtung
- 4a: äußere Seitenwand
- 4b: Trennwand
- 4c: äußere Wand
- 5: Schleuse
- 5a: äußere Schleuse
- 5b: innere Schleuse
- 5c: aus Fenstern umfunktionierte oder an denselben angeordnete innere Schleusen der inneren Seite der Kammereinrichtungen oder inneren Seitenwand der Kammereinrichtung
- 5e: Schleusentor, Schleusenklappe
- 20: unterer Bereich
- 21: oberer Bereich
- 30: den Innenraum begrenzende Seiten der Trennwand
- 31: den Innenraum begrenzende Seite der äußeren Seitenwand
- 32: den Innenraum begrenzende Seite der Beschichtung oder der inneren Seitenwand
- 50: Umlaufrichtung um die Außenwände
- A: in dem Innenraum verlaufende Mitte-Längsachse

## Patentansprüche

1. Dämmvorrichtung für ein Bauwerk (1) mit an Außenseiten (3c) von Außenwänden (1a) desselben angeordneten Kammereinrichtungen (4) zur Entfeuchtung und Temperierung der Außenwände des Bauwerks, die Kammereinrichtungen (4) Innenräume (3a) aufweisen,
a. die Außenseiten (3c) der Außenwände (1a) eine Beschichtung (2) aufweisen,
b. die Kammereinrichtungen (4) aufeinander angeordnet sind,
**dadurch gekennzeichnet, dass**
c. die Beschichtung (2) wasserdicht und wasserdampfdurchlässig ausgestaltet ist,
d. die Kammereinrichtungen (4) in einer Umlaufrichtung um die Außenwände (1a) des Bauwerks (1) sich erstrecken,
e. die Kammereinrichtungen (4) quer zu einer Lotrechten ausgerichtet sind,
f. die Innenräume (3a) der Kammereinrichtungen (4) von äußeren Seitenwänden (4a) und Trennwänden (4b) sowie von der Beschichtung (2) begrenzt sind,
g. die äußeren Seitenwände (4a) lichtdurchlässig ausgebildet sind,
h. die Trennwände (4b) in den oberen Bereichen (21) und unteren Bereichen (20) der Kammereinrichtungen (4) angeordnet sind,
i. die Trennwände (4b) an den Außenseiten (3c) luftdicht gekoppelt sind,
k. die Trennwände (4b) innere Schleusen (5b) zur Steuerung von Luftzirkulation und von Temperatur in den Innenräumen (3a) der einander benachbarten Kammereinrichtungen (4) aufweisen,
1. die äußeren Seitenwände (4a) äußere Schleusen (5a) zur Steuerung der Luftzirkulation und der Temperatur in den Innenräumen (3a) der Kammereinrichtungen (4) sowie zum Austausch der Luft der Innenräume (3a) der Kammereinrichtungen (4) mit der der Außenumgebung aufweisen,
m. benachbarte Kammereinrichtungen (4) jeweils eine gemeinsame Trennwand (4b) aufweisen.

2. Dämmvorrichtung für ein Bauwerk mit an Außenseiten (3c) von Außenwänden (1a) desselben angeordneten Kammereinrichtungen (4) zur Entfeuchtung und Temperierung des Bauwerks nach Anspruch 1, **dadurch gekennzeichnet, dass** die äußeren Seitenwände (4a) und/oder die Trennwände (4b) als Platten oder Folien ausgestaltet sind.

3. Dämmvorrichtung für ein Bauwerk mit an Außenseiten (3c) von Außenwänden (1a) desselben angeordneten Kammereinrichtungen (4) zur Entfeuchtung und Temperierung des Bauwerks nach Anspruch 1 oder 2, **dadurch gekennzeichnet, dass** die äußeren Seitenwände (4a) und/oder die Trennwände (4b) mit einem glasartigen Material und / oder kunststoffartigem Material ausgebildet sind.

4. Dämmvorrichtung für ein Bauwerk mit an Außenseiten (3c) von Außenwänden (1a) desselben angeordneten Kammereinrichtungen (4) zur Entfeuchtung und Temperierung des Bauwerks nach einem der vorhergehenden Ansprüche, **dadurch gekennzeichnet, dass** die inneren Schleusen (5b) und /oder die äußeren Schleusen (5a) manuell, mechanisch, automatisch, vorzugsweise digital, angesteuert sind.

5. Dämmvorrichtung für ein Bauwerk mit an Außenseiten (3c) von Außenwänden (1a) desselben angeordneten Kammereinrichtungen (4) zur Entfeuchtung und Temperierung des Bauwerks nach Anspruch 5, **dadurch gekennzeichnet, dass** die Steuerung auf Grundlage einer Zeitschaltung und/oder auf Grundlage der geografischen Lage und/oder Auswertung von Messwerten physikalischer Größen, insbesondere Temperatur und/oder Luftfeuchtigkeit, in den Innenräumen (3a) der Kammereinrichtungen (4) und/oder in der Außenumgebung und/oder der Wetterbedingungen erfolgt.

6. Dämmvorrichtung für ein Bauwerk mit an den Außenwänden desselben angeordneten Kammereinrichtungen (4) zur Entfeuchtung und Temperierung des Bauwerks nach Anspruch 6, **dadurch gekennzeichnet, dass** die digitale Steuerung der Schleusen durch SMART-Home über eine SMART-Steuerung erfolgt.

7. Dämmvorrichtung für ein Bauwerk mit an Außenseiten (3c) von Außenwänden (1a) desselben angeordneten Kammereinrichtungen (4) zur Entfeuchtung und Temperierung des Bauwerks nach einem der vorhergehenden Ansprüche, **dadurch gekennzeichnet, dass** die in den Innenräumen (3a) verlaufenden Mitte-Längsachsen (A) der Kammereinrichtungen (4) quer zu der Lotrechten ausgerichtet sind.

8. Dämmvorrichtung für ein Bauwerk mit an Außenseiten (3c) von Außenwänden (1a) desselben angeordneten Kammereinrichtungen (4) zur Entfeuchtung und Temperierung des Bauwerks nach einem der vorhergehenden Ansprüche, **dadurch gekennzeichnet, dass** die Trennwände (4b) quer zu einer Lotrechten und die äußeren Seitenwände (4a) parallel zu einer Lotrechten ausgerichtet sind.

9. Dämmvorrichtung für ein Bauwerk mit an Außenseiten (3c) von Außenwänden (1a) desselben angeordneten Kammereinrichtungen (4) zur Entfeuchtung und Temperierung des Bauwerks nach einem der vorhergehenden Ansprüche, **dadurch gekennzeichnet, dass** die Trennwände (4b) und /oder die äußeren Wänden (4c) der Kammereinrichtungen (4) zur Kopplung an den Außenseiten (3c) der Außenwände (1a) und/oder der Beschichtung (2) vorgesehen sind.

10. Kostengünstiges Verfahren zur dauerhaften Isolierung eines Bauwerkes gegenüber Temperaturverlusten, vorzugsweise Aufheizung des Gebäudes, und zur Beibehaltung der Wasserdampfdurchlässigkeit der Außenwände (1a) von Bauwerken in eine Außenumgebung mittels der Dämmvorrichtung nach einem der vorhergehenden Ansprüche, wobei
gegen die Außenseiten (3c) der Außenwände (1a) des Bauwerkes eine wasserdichte und wasserdampfdurchlässige Beschichtung (2) aufgetragen wird,
die Kammereinrichtungen (4) mit ihren Trennwänden (4b) und ihren Wänden (4c) gegen die Beschichtung (2) der Außenseiten (3c) angesetzt und luftdicht an der Beschichtung (2) und/oder den Außenseiten (3c) der Außenwände (1a) gekoppelt werden,
mindestens zwei aufeinander befindliche Kammereinrichtungen (4) quer zur Lotrechten ausgerichtet und in einer Umlaufrichtung um die Außenwände (3a) des Bauwerks sich erstreckend angeordnet werden,
die Luftzirkulation, die Temperatur und/oder die Feuchtigkeit in den Innenräumen (3a) der Kammereinrichtungen (4) und/oder zwischen denselben über in den Trennwänden (4b) und in den äußeren wasserdichten, wasserdampfdurchlässigen Seitenwänden (4a) angeordnete Schleusen (5a, 5b) angesteuert werden.
gegen die Außenseiten (3c) der Außenwände (1a) des Bauwerkes eine wasserdichte und wasserdampfdurchlässige Beschichtung (2) aufgetragen wird,
die Kammereinrichtungen (4) gegen die Beschichtung (2) angesetzt und luftdicht an der Beschichtung (2) und/oder den Außenseiten (3c) der Außenwände (1a) gekoppelt werden,
mindestens zwei aufeinander befindliche Kammereinrichtungen (4) quer zur Lotrechten ausgerichtet und in einer Umlaufrichtung um die Außenwände (3a) des Bauwerks sich erstreckend angeordnet werden,
die Luftzirkulation, die Temperatur und/oder die Feuchtigkeit in den Innenräumen (3a) der Kammereinrichtungen (4) und/oder zwischen denselben über in den Trennwänden (4b) und in den äußeren wasserdichten, wasserdampfdurchlässigen Seitenwänden (4a) angeordnete Schleusen (5a, 5b) angesteuert werden.

11. Kostengünstiges Verfahren zur dauerhaften Isolierung eines Bauwerkes gegenüber Temperaturverlusten, vorzugsweise Aufheizung des Gebäudes, und zur Beibehaltung der Wasserdampfdurchlässigkeit der Außenwände (1a) von Bauwerken in eine Außenumgebung mittels der Dämmvorrichtung nach Anspruch 10, **dadurch gekennzeichnet, dass** die Trennwände (4b) und /oder die äußeren Wände (4c) der Kammereinrichtungen (4) gegen die Beschichtung (2) oder gegen die die Beschichtung (2) seitlich begrenzenden Abschnitte der Außenseiten (3c) der Außenwände (1a) angesetzt und luftdicht an diesen gekoppelt werden.
